# EUROPÄISCHE PATENTSCHRIFT

(11) **EP 4 592 039 B1**
(45) Veröffentlichungstag und Bekanntmachung des Hinweises auf die Patenterteilung: **08.04.2026**
(21) Anmeldenummer: 25152782.6
(22) Anmeldetag: 20.01.2025
(51) Int. Cl.: B25J 9/00, B25J 9/04, B25J 9/10, B25J 9/12, B25J 11/00, B25J 19/02

(54) **MANIPULATOR UND ROBOTERAUFBAU**
MANIPULATOR AND ROBOT ASSEMBLY
MANIPULATEUR ET CONSTRUCTION DE ROBOT

(30) Priorität: 24.01.2024 DE 102024101989
(43) Veröffentlichungstag der Anmeldung: 30.07.2025
(73) Patentinhaber: MD Elektronik GmbH, 84478 Waldkraiburg (DE)
(72) Erfinder: HELD, Benedikt, 83026 Rosenheim (DE); MEIERLOHR, Christian, 83512 Wasserburg am Inn (DE)
(74) Vertreter: Kehl, Ascherl, Liebhoff & Ettmayr Patentanwälte Partnerschaft mbB

(56) Entgegenhaltungen:
- EP-A1- 3 838 499
- EP-A2- 1 052 071
- WO-A1-2023/162816
- FR-A1- 2 648 378

## Beschreibung

Die vorliegende Erfindung betrifft einen Manipulator, d.h. den physikalisch, insbesondere mechanisch mit der Umgebung interagierenden Teil eines Roboteraufbaus. Ferner betrifft die Erfindung einen den Manipulator umfassenden Roboteraufbau.

Im Stand der Technik sind Manipulatoren in mannigfaltigen Ausführungen für Manipulier-, Positionier- und Messaufgaben verbreitet und beispielsweise als Roboterarme von Industrierobotern bekannt. Um die zum Ausführen der Manipulier-, Positionier- oder Messaufgaben erforderlichen Werkzeuge sinnvoll einsetzen zu können, müssen diese durch geeignete translatorische bzw. rotatorische Bewegungen im Raum positioniert und orientiert werden können.

Dabei werden oft hohe Anforderungen an Bewegungsdynamik und Positioniergenauigkeit gestellt. Um eine geringe Taktzeit des gesamten Systems zu realisieren, ist es notwendig, die Zykluszeit des einzelnen Handhabungsprozesses so kurz wie möglich zu halten. Dies setzt voraus, dass der sogenannte Tool-Center-Point (TCP) des Manipulators hochdynamisch bewegt werden kann.

Bei der Handhabung von leichten Werkstücken führt eine im Verhältnis hierzu meist hohe Robotermasse dazu, dass ein Großteil der aufgewendeten Energie zum Bewegen des Roboters selbst aufgewendet wird, sowie zu einer Limitierung der Bewegungsdynamik. Ein Grund hierfür sind die häufig seriell angeordneten Antriebe der Manipulatoren, wie es bei Robotern vom Typ SCARA oder Vertikal-Knickarm-Robotern der Fall ist. Insbesondere ergeben sich hohe Trägheitsmomente in Bezug auf die Antriebsachsen, die sich am Anfang der kinematischen Kette befinden. Manipulatoren mit parallelkinematischen Strukturen, wie beispielsweise bei Delta-Robotern, können hier zwar Abhilfe schaffen. Bei Verwendung von Manipulatoren dieses Typs ergeben sich jedoch häufig Probleme mit der Implementierung in Produktionsanlagen, da Delta-Roboter ein ungünstiges Verhältnis von Arbeitsraum zu Bauraum aufweisen. Dabei ist in der Regel die Montage oberhalb des Prozessraums zwingend erforderlich und schränkt daher die Anordnung weiterer Komponenten der Produktionsanlage stark ein. Insbesondere weist der Manipulator Störkonturen auf, welche sich negativ auf die Peripherie bzw. das Prozessumfeld des Roboters auswirken können (beispielsweise die Unterbringung einer Kamera zur Prozessüberwachung).

Aus EP 1052071 A2 ist ein zweidimensional beweglicher Manipulator mit einem passiven Arm bekannt, der ein proximales und ein distales Glied aufweist. Das proximale Glied besitzt zwei parallele Streben, die an zwei entsprechenden, an einem feststehenden Vertikalträger angeordneten Gelenkachsen sowie an zwei Achsen eines Adapters angelenkt sind. Ebenfalls an dem Adapter sowie an einem Roboterflansch angelenkt sind zwei parallele Streben des distalen Glieds. Der passive Arm wird ausgelenkt mittels einer im Vertikalträger angeordneten Antriebseinheit, die über ein Gestänge auf das distale Glied wirkt, und mittels einer über ein weiteres Gestänge auf das proximale Glied wirkenden Antriebseinheit, die in einem Querträger angeordnet ist, der oberhalb des passiven Arms vom Vertikalträger auskragt. Bei einer Auslenkung des passiven Arms wird der Adapter relativ zur Horizontalen verkippt.

Die Dokumente EP 3 838 499 A1, WO 2023/162816 A1 und FR 2 648 378 A1 offenbaren ebenfalls Manipulatoren des Standes der Technik.

In Anbetracht des Stands der Technik ist es Aufgabe der vorliegenden Erfindung, einen Manipulator zu schaffen, der es ermöglicht, die Taktzeiten für vorgegebene Bewegungsabläufe eines Roboterflansches gegenüber üblichen Taktzeiten herkömmlicher Manipulatoren zu senken.

Gemäß einem Aspekt der Erfindung wird diese Aufgabe von einem Manipulator gemäß Anspruch 1 eingelöst.

Insbesondere stellt die vorliegende Erfindung somit einen Manipulator bereit, der folgendes aufweist: einen um eine Vertikalachse drehbaren Vertikalträger, einen mit dem Vertikalträger mitdrehend verbundenen, vom Vertikalträger auskragenden Querträger, eine am Querträger angeordnete, vom Vertikalträger beabstandete, innere proximale Gelenkachse, eine am Querträger angeordnete, vom Vertikalträger weiter als die innere proximale Gelenkachse beabstandete, äußere proximale Gelenkachse, eine innere proximale Strebkonstruktion, die einen an der inneren proximalen Gelenkachse angelenkten proximalen Endbereich und einen distalen Endbereich aufweist, eine äußere proximale Strebkonstruktion, die einen an der äußeren proximalen Gelenkachse angelenkten proximalen Endbereich und einen distalen Endbereich aufweist, eine am distalen Endbereich der inneren proximalen Strebkonstruktion angeordnete innere Mittelgelenkachse, eine am distalen Endbereich der äußeren proximalen Strebkonstruktion angeordnete äußere Mittelgelenkachse, eine innere distale Strebkonstruktion, die einen an der inneren Mittelgelenkachse angelenkten proximalen Endbereich und einen distalen Endbereich aufweist, eine äußere distale Strebkonstruktion, die einen an der äußeren Mittelgelenkachse angelenkten proximalen Endbereich und einen distalen Endbereich aufweist, eine am distalen Endbereich der inneren distalen Strebkonstruktion angeordnete innere distale Gelenkachse, eine am distalen Endbereich der äußeren distalen Strebkonstruktion angeordnete äußere distale Gelenkachse, einen an der inneren Mittelgelenkachse und der äußeren Mittelgelenkachse angelenkten Adapter, einen an der inneren distalen Gelenkachse und der äußeren distalen Gelenkachse angelenkten Roboterflansch, eine am Vertikalträger angebrachte erste Antriebseinheit, ein proximales Zug-Druck-Element zum Übertragen einer zur Auskragrichtung des Querträgers parallelen Kraftkomponente von der ersten Antriebseinheit auf eine der proximalen Strebkonstruktionen, eine am Vertikalträger angebrachte zweite Antriebseinheit, und ein distales Zug-Druck-Element zum Übertragen einer zur Auskragrichtung des Querträgers parallelen Kraftkomponente von der zweiten Antriebseinheit auf eine der distalen Strebkonstruktionen. Die inneren und äußeren distalen und proximalen Gelenkachsen sowie die Mittelgelenkachsen sind orthogonal zu der von der Vertikalachse und der Auskragrichtung des Querträgers aufgespannten Ebene angeordnet.

Gelenk- bzw. Mittelegelenkachsen bezeichnen hierin keine Bauteile, sondern entsprechend der üblichen Wortbedeutung gedachte Linien, um welche entsprechende Gelenkbewegungen der an ihrem jeweiligen Ort jeweils angelenkten Bauteile erfolgen können.

Als Auskragrichtung wird eine Horizontale verstanden, die durch den Schwerpunkt der Querschnittsfläche des Querträgers am Ort der Befestigung des Querträgers am Vertikalträger verläuft und mit der Verbindungslinie von diesem Schwerpunkt zum Schwerpunkt der von der inneren und äußeren proximalen Gelenkachse abstandsgleich gelegenen Querschnittsfläche des Querträgers zusammenfällt oder mit der besagten Verbindungslinie in einer gemeinsamen vertikalen Ebene verläuft.

Dabei bezeichnen die Attribute *innere*/*äußere* eine relativ zur Vertikalachse radial näher bzw. radial weiter entfernte Anordnung, und die Attribute *proximal*/*distal* eine entlang der kinematischen Kette des Manipulators näher an dessen Basis (Verankerung) bzw. weiter von der Basis entfernte Anordnung. Der Manipulator ist somit an seiner am weitesten proximal gelegenen Position verankert, der Roboterflansch bzw. ein hieran befestigtes Werkzeug befinden sich an der am weitesten distal gelegenen Position des Manipulators.

Die innere und äußere proximale Strebkonstruktion bilden ein proximales Glied, die innere und äußere distale Strebkonstruktion ein distales Glied des Manipulators. Die Zug-Druck-Elemente werden als proximal oder distal bezeichnet, je nachdem ob sie auf das proximale oder das distale Glied wirken. Das proximale und distale Glied bilden einen passiven Arm des Manipulators.

Erfindungsgemäß ist durch die Bewegung um die Vertikalachse zusätzlich zur Beweglichkeit des passiven Arms eine dreidimensionale Positionierbarkeit des Roboterflansches gegeben. Der Manipulator kann somit seinen TCP in allen drei translatorischen Freiheitsgraden positionieren (x, y, z). Der Roboterflansch kann dabei stets horizontal ausgerichtet bleiben.

Vorteilhaft liegt somit eine Kombination aus serieller und paralleler kinematischer Struktur vor, d.h. eine hybride kinematische Struktur. Die parallelkinematische Struktur mit geschlossener kinematischer Kette, aufweisend die erste und zweite Antriebseinheit, den passiven Arm, den Vertikal- und Querträger sowie die Zug-Druck-Elemente, ist seriell auf die vertikale Achse als Schwenkantriebsachse aufgesetzt. Über diese Struktur kann der TCP frei im Raum positioniert werden. Seriell an der parallelkinematischen Kette kann eine weitere Antriebseinheit angebracht werden, um ein Werkzeug zu orientieren.

Horizontal kann, muss aber nicht unbedingt waagrecht im Schwerefeld der Erde bedeuten. Gleichermaßen kann, muss aber nicht unbedingt vertikal lotrecht im Schwerefeld der Erde bedeuten. Vertikal bezeichnet die Richtung der z-Achse und horizontal die Ebene der x- und y-Achse im für die vorliegende Beschreibung gewählten kartesischen Bezugssystem, dessen Ausrichtung gegenüber einem an lot- und waagrechten Achsen im Schwerefeld orientierten Bezugssystem gekippt sein kann (aber nicht muss).

In der von der Vertikalachse und der Auskragrichtung des Querträgers aufgespannten Ebene ergibt sich vorteilhaft eine Zwangsführung des passiven Arms, indem die proximalen Gelenkachsen und Mittelgelenkachsen bzw. die Mittelgelenkachsen und distalen Gelenkachsen in besagter Ebene ein Parallelogramm aufspannen. Das Übertragen einer Zugkraftkomponente parallel zur Auskragrichtung des Querträgers auf die proximale oder distale Strebkonstruktion resultiert in einer Bewegung des Adapters bzw. des Roboterflansches radial nach innen relativ zur Vertikalachse, das Übertragen einer Druckkraftkomponente parallel zur Auskragrichtung des Querträgers auf die proximale oder distale Strebkonstruktion resultiert in einer Bewegung des Adapters bzw. des Roboterflansches radial nach außen relativ zur Vertikalachse.

Durch die Anbringung der ersten und zweiten Antriebseinheit am Vertikalträger sind die zu verschwenkenden Massen an weiter distal gelegenen Gliedern des Manipulators reduziert. Die somit verminderten Trägheitsmomente ermöglichen ein gegenüber herkömmlichen Manipulatoren deutlich schnelleres Verschwenken sämtlicher Glieder des Manipulators. Indem sowohl die inneren proximalen und distalen Strebkonstruktionen als auch die äußeren proximalen und distalen Strebkonstruktionen an jeweils einer gemeinsamen Mittelegelenkachse angelenkt sind, kann der Adapter sehr kompakt und mit entsprechend geringem Trägheitsmoment bezüglich der proximalen Gelenkachsen sowie der Vertikalachse ausgeführt werden.

Dabei wird zusätzlich ein vorteilhaftes Verhältnis von Bauraum zu Arbeitsraum sowie eine einfache Integrierbarkeit des Manipulators in eine Prozessumgebung mittels einer Bodenmontage ermöglicht.

Gemäß einer vorteilhaften Ausführungsform weist der Manipulator ferner ein weiteres Zug-Druck-Element auf, das mit dem proximalen Zug-Druck-Element ein proximales Zug-Druck-Elementepaar zum Übertragen der zur Auskragrichtung des Querträgers parallelen Kraftkomponente von der ersten Antriebseinheit auf eine der proximalen Strebkonstruktionen bildet. Zusätzlich oder alternativ kann vorteilhaft ein weiteres Zug-Druck-Element vorgesehen sein, das mit dem distalen Zug-Druck-Element ein distales Zug-Druck-Elementepaar zum Übertragen der zur Auskragrichtung des Querträgers parallelen Kraftkomponente von der ersten Antriebseinheit auf eine der proximalen Strebkonstruktionen bildet.

Vorzugsweise ist das proximale Zug-Druck-Element oder -Elementepaar zum Übertragen der zur Auskragrichtung des Querträgers parallelen Kraftkomponente von der ersten Antriebseinheit auf die innere proximale Strebkonstruktion ausgelegt. Zusätzlich oder alternativ kann vorteilhaft das distale Zug-Druck-Element oder -Elementepaar zum Übertragen der zur Auskragrichtung des Querträgers parallelen Kraftkomponente von der zweiten Antriebseinheit auf die innere distale Strebkonstruktion ausgelegt sein. Zwar ist es auch möglich, stattdessen Zug-Druck-Elemente vorzusehen, welche die zur Auskragrichtung des Querträgers parallele Kraftkomponente jeweils auf die äußere proximale bzw. äußere distale Strebkonstruktion übertragen, allerdings erfordert dies eine etwas längere Dimensionierung der Zug-Druck-Elemente und somit etwas größere bewegte Massen.

Gemäß einer vorteilhaften Ausführungsform können/kann die erste Antriebseinheit und/oder die zweite Antriebseinheit als Linearantrieb ausgeführt werden. Dabei ist durch geeignete Anordnung des entsprechenden Zug-Druck-Elements sowohl eine vertikale als auch eine nahezu horizontale Ausrichtung des Linearantriebs vorteilhaft umsetzbar.

Dies ist vorteilhaft insbesondere mittels elektrischem Linearmotor, Hydraulik- oder Pneumatikzylinder implementierbar. Die Linearantriebe können somit generell elektrisch (beispielsweise elektromagnetisch) oder fluidisch (beispielsweise hydraulisch oder pneumatisch) angetrieben werden. Alle Linearantriebe können vorteilhaft als Direktantriebe ohne zusätzlich mechanische Übertragungselemente ausgeführt werden. Alternativ können die Linearantriebe aber auch über rotatorische Anriebe in Kombination mit mechanischen Übertragungselementen realisiert werden (insbesondere Gewindetrieb, Zahnriemen oder Zahnstangenritzel). Aufgrund der günstigen Massenverteilung des Manipulators sind allerdings meist keine mechanischen Übertragungselemente notwendig, da die Belastung der Antriebe durch die entsprechenden Trägheitsmomente gering ist.

Gemäß einer weiteren vorteilhaften Ausführungsform können/kann die erste Antriebseinheit und/oder die zweite Antriebseinheit als Rotationsantrieb ausgeführt werden. Vorzugsweise weist dabei das proximale Zug-Druck-Element eine mit der ersten Antriebseinheit verbundene erste Schwinge und einen an der ersten Schwinge und dem proximalen Glied angelenkten proximalen Lenker auf, und/oder das distale Zug-Druck-Element weist eine mit der zweiten Antriebseinheit verbundene zweite Schwinge und einen an der zweiten Schwinge und dem distalen Glied angelenkten distalen Lenker auf. Alternativ kann der Fachmann vorteilhaft auf Kraftübertragungselemente wie Viergelenkketten oder Koppelgetriebe zurückgreifen.

Die Rotationsantriebe können elektrisch (z.B. elektromagnetisch) oder fluidisch (insbesondere hydraulisch oder pneumatisch) angetrieben werden. Alle rotatorischen Antriebe können vorteilhaft als Direktantriebe ohne mechanische Übertragungselemente, alternativ aber auch mit zusätzlichen mechanischen Übertragungselementen (beispielsweise Zahnriemen oder Zahnradgetriebe) ausgeführt werden. Aufgrund der günstigen Massenverteilung des Manipulators sind allerdings meist keine mechanischen Übertragungselemente erforderlich, da die Belastung der Antriebe durch die entsprechenden Trägheitsmomente gering ist.

Gemäß einer besonders bevorzugten Ausführungsform weist die innere proximale Strebkonstruktion ein inneres proximales Strebenpaar auf, und/oder die innere distale Strebkonstruktion weist ein inneres distales Strebenpaar auf. Hierdurch kann vorteilhaft vermieden werden, dass sich das proximale bzw. distale Glied des Manipulators auf unerwünschte Weise verwindet. Die Verwindungssteifigkeit des proximalen bzw. distalen Glieds des Manipulators kann weiter vorteilhaft vermindert werden, indem das innere proximale Strebenpaar über eine innere proximale Querstrebenkonstruktion miteinander verbunden ist, und/oder das innere distale Strebenpaar über eine innere distale Querstrebenkonstruktion miteinander verbunden ist.

Insbesondere ergibt sich so eine vorteilhafte Zwangsführung des passiven Arms, indem die Anlenkpunkte der proximalen Strebkonstruktionen an den proximalen Gelenkachsen und Mittelgelenkachsen bzw. die Anlenkpunkte der distalen Strebkonstruktionen an den Mittelgelenkachsen und distalen Gelenkachsen (jeweils) ein schiefwinkliges Prisma aufspannen.

Vorteilhafterweise kann die äußere proximale Strebkonstruktion als äußere proximale Einzelstrebe ausgeführt sein, und/oder die äußere distale Strebkonstruktion als äußere distale Einzelstrebe ausgeführt sein. Dies kann vorteilhaft dazu beitragen, das Trägheitsmoment für Schwenkbewegungen um die Vertikalachse möglichst gering zu halten.

Besonders vorteilhaft kann das Trägheitsmoment für Schwenkbewegungen um die Vertikalachse reduziert werden, indem die jeweilige Masse der ersten und zweiten Antriebseinheit möglichst nah an der Vertikalachse angeordnet wird.

Dies kann insbesondere mit einer Auslegung erreicht werden, bei der der horizontale Abstand zwischen dem Schwerpunkt der ersten Antriebseinheit und der Vertikalachse und/oder der horizontale Abstand zwischen dem Schwerpunkt der zweiten Antriebseinheit und der Vertikalachse geringer ist als die Hälfte, vorzugsweise als ein Drittel, des horizontalen Abstandes zwischen der inneren proximalen Gelenkachse und der Vertikalachse.

Gemäß einer weiteren vorteilhaften Auslegung durchdringt die Vertikalachse die erste Antriebseinheit und/oder die zweite Antriebseinheit. Vorzugsweise liegt dabei in Projektion auf eine horizontale Ebene der Schwerpunkt der ersten Antriebseinheit näher an der Vertikalachse als an einem beliebigen Punkt der Außenkontur der ersten Antriebseinheit, und/oder der Schwerpunkt der zweiten Antriebseinheit näher an der Vertikalachse als an einem beliebigen Punkt der Außenkontur der zweiten Antriebseinheit.

Für die Bestimmung des Schwerpunkts wird dabei von der Antriebseinheit ohne (z.B. elektrische oder pneumatische) Zuleitungen ausgegangen. Da sich die Schwerpunktlage je nach Position des Läufers (Rotors bzw. Translators) ändern kann, werden in diesem Fall die obigen Kriterien mit der Näherung als erfüllt betrachtet, dass der Schwerpunkt der jeweiligen Antriebseinheit dem Schwerpunkt des Stators der jeweiligen Antriebseinheit entspricht.

Gemäß einer weiteren vorteilhaften Auslegung sind in keinem der vier Sektoren, die zwischen zwei beliebigen orthogonal zueinander stehenden Ebenen liegen, deren Schnittlinie mit der Vertikalachse zusammenfällt, mehr als zwei Drittel der Masse der ersten Antriebseinheit und/oder mehr als zwei Drittel der Masse der zweiten Antriebseinheit konzentriert.

Gemäß einer vorteilhaften Ausführungsform weist der Vertikalträger zwei Vertikalholme auf. Vorzugsweise sind diese symmetrisch zueinander bezüglich der der von der Vertikalachse und der Auskragrichtung des Querträgers aufgespannten Ebene angeordnet. Vorteilhaft kann die erste Antriebseinheit an einem der Vertikalholme und die zweite Antriebseinheit am zweiten der Vertikalholme angebracht sein. Eine besonders vorteilhafte Anordnung in Bezug auf die Vertikalachse kann umgesetzt werden, indem die erste Antriebseinheit und/oder die zweite Antriebseinheit zwischen den Vertikalholmen angeordnet werden.

Am Roboterflansch können vorteilhaft verschiedene Effektoren bzw. Werkzeuge vorgesehen sein, insbesondere ein Greifwerkzeug, ein spanabhebendes Werkzeug, ein Fügewerkzeug oder ein FDM-Werkzeug (FDM: *Fused Deposition Modeling*)*.* An dem Roboterflansch kann anstelle oder ergänzend zu einem Effektor auch eine Aufnahme für ein Werkstück ausgebildet sein, so dass der Manipulator ein in der Aufnahme gehaltertes Werkstück im Raum definiert führen kann.

Gemäß einer vorteilhaften Weiterbildung ist der Effektor bzw. das Werkzeug relativ zum Roboterflansch drehbar, und der Manipulator weist eine dritte Antriebseinheit zum Drehen bzw. zum räumlichen Orientieren des Werkzeugs bzw. Effektors auf, die vorzugsweise am Vertikalträger oder am Querträger angebracht sein kann.

Ein die dritte Antriebseinheit mit dem Werkzeug zu dessen Antrieb verbindendes Drehmoment-Übertragungselement, das insbesondere als Kardanwelle ausgebildet sein kann, kann dabei vorteilhaft als Teleskopwelle ausgeführt oder axial verschieblich in der dritten Antriebseinheit gelagert sein.

Besonders vorteilhaft kann das Trägheitsmoment für Schwenkbewegungen um die Vertikalachse wiederum reduziert werden, indem die Masse der dritten Antriebseinheit möglichst nah an der Vertikalachse angeordnet wird.

Dies kann insbesondere mit einer Auslegung erreicht werden, bei welcher der horizontale Abstand zwischen dem Schwerpunkt der dritten Antriebseinheit und der Vertikalachse geringer ist als die Hälfte des horizontalen Abstandes zwischen der inneren proximalen Gelenkachse und der Vertikalachse.

Bei einer besonders vorteilhaften Ausgestaltung ist die dritte Antriebseinheit am Vertikalträger angebracht, und die Vertikalachse durchdringt die dritte Antriebseinheit.

Alternativ kann die dritte Antriebseinheit auch vorteilhaft am Roboterflansch untergebracht sein.

Gemäß einer vorteilhaften Weiterbildung weist der Manipulator ferner eine mit dem Vertikalträger mitdrehend verbundene Kamera auf, deren optische Achse in der horizontalen Projektion mit der Auskragrichtung des Querträgers zusammenfällt oder mit der Auskragrichtung des Querträgers einen Winkel von höchstens 15 Grad bildet. Die optische Achse der Kamera entspricht somit ungefähr der radialen Richtung von der Vertikalachse zum Roboterflansch, d.h. der Roboterflansch bzw. ein daran angebrachtes Werkzeug ist nahe der Mitte des Kamerabildes positionierbar. Als optische Achse wird die Mittelsenkrechte auf der von der Kamerablende aufgespannten Fläche verstanden.

Insbesondere bei sogenannten "Pick-and-Place"-Anwendungen ist es oftmals notwendig, ein vom Manipulator gegriffenes Werkstück mittels einer Kamera zu überprüfen (z.B. Lageprüfung oder Qualitätsprüfung), bevor es an einen Folgeprozess übergeben werden kann. Dieser Prüfprozess wird durch die entsprechend der vorliegenden Ausführungsform in den kinematischen Aufbau des Manipulators integrierte Kamera beschleunigt.

Ein Manipulator gemäß dem Stand der Technik muss hingegen das Werkstück an einer definierten Position vor einer in der Produktionsanlage montierten Kamera positionieren und dort kurz halten, um eine geeignete Bildaufnahme zu ermöglichen. Dies führt zu einer Taktzeiterhöhung, also einer Verlangsamung des Prozesses gegenüber der vorliegenden Lösung.

Gemäß einer vorteilhaften Ausführungsform kann die Kamera höhenverstellbar und/oder um eine orthogonal zur Bildachse stehende horizontale Achse schwenkbar am Vertikalträger befestigt sein. Die Bildachse der Kamera kann so für unterschiedliche vertikale Positionen des Roboterflansches näherungsweise in Richtung des Roboterflansches bzw. eines daran befestigten Werkzeugs ausgerichtet werden.

Alternativ oder zusätzlich können vorteilhaft auch weitere Messmittel vorgesehen sein, um die Position des TCPs (insbesondere in Bezug auf die Roboterbasis oder den Vertikalträger) direkt zu messen. Gleichermaßen kann der Manipulator vorteilhaft auch zusätzliche Sensorik in den passiven Gelenken aufweisen, um beispielsweise, aktuelle Drehwinkelstellung zu messen, oder in den Antriebseinheiten, um beispielsweise Drehmomente zu erfassen.

Besonders vorteilhaft kann der Manipulator ferner eine Vertikalträger-Antriebseinheit zum Drehen des Vertikalträgers um die Vertikalachse aufweisen. Da das Trägheitsmoment um die Vertikalachse gering ist, muss auch nur ein verhältnismäßig geringes Drehmoment zum Verschwenken des Manipulators um die Vertikalachse aufgebracht werden, so dass sich die Vertikalträger-Antriebseinheit besonders vorteilhaft auch als Direktantrieb ausführen lässt.

Bezüglich seiner Einsatzmöglichkeiten ist der erfindungsgemäße Manipulator hochflexibel und kann leicht an unterschiedlichste Aufgaben angepasst werden, beispielsweise auch für den kollaborativen Betrieb.

Für verschiedenste Einsatzgebiete kann vorteilhaft eine Steuerungstechnik eingesetzt werden, die eine definierte kartesische Trajektorie für die TCP-Bewegung erstellt, die Trajektorie über die inverse Kinematik in gelenkspezifische Bewegungen überführt und die entsprechenden Sollpositionen an einen sogenannten *Motion Controller* übergibt, der die entsprechende Regelung der Antriebseinheiten übernimmt.

Gemäß einem weiteren Aspekt der Erfindung wird ein Roboteraufbau, insbesondere als Teil einer automatisierten Kabelbearbeitungsanlage, umfassend einen wie oben beschriebenen Manipulator, bereitgestellt.

Die Erfindung wird nachfolgend in beispielhafter Weise anhand der beigefügten schematischen Zeichnungen näher erläutert. Die Zeichnungen sind nicht maßstabsgetreu; insbesondere entsprechen Verhältnisse der einzelnen Abmessungen zueinander aus Gründen der Anschaulichkeit teilweise nicht den Abmessungsverhältnissen in tatsächlichen technischen Umsetzungen. Es werden mehrere bevorzugte Ausführungsbeispiele beschrieben, auf welche die Erfindung jedoch nicht beschränkt ist.

Grundsätzlich kann jede im Rahmen der vorliegenden Anmeldung beschriebene bzw. angedeutete Variante der Erfindung besonders vorteilhaft sein, je nach wirtschaftlichen und technischen Bedingungen im Einzelfall.

Es zeigt
- Fig. 1: ein Prinzipbild eines Ausführungsbeispiels des erfindungsgemäßen Manipulators, wobei die erste und zweite Antriebseinheit als verkippbar angebrachte Linearantriebe ausgeführt sind,
- Fig. 2: die schematische perspektivische Darstellung einer möglichen technischen Umsetzung des Manipulators gemäß Fig. 1,
- Fig. 3: ein Prinzipbild eines Ausführungsbeispiels des erfindungsgemäßen Manipulators, wobei die erste und zweite Antriebseinheit als vertikal angeordnete Linearantriebe ausgeführt sind,
- Fig. 4: die schematische perspektivische Darstellung einer möglichen technischen Umsetzung des Manipulators gemäß Fig. 3,
- Fig. 5: ein Prinzipbild eines Ausführungsbeispiels des erfindungsgemäßen Manipulators, wobei die erste und zweite Antriebseinheit als Rotationsantriebe mit vertikaler Rotationsachse ausgeführt sind,
- Fig. 6: die schematische perspektivische Darstellung einer möglichen technischen Umsetzung des Manipulators gemäß Fig. 5,
- Fig. 7: ein Prinzipbild eines Ausführungsbeispiels des erfindungsgemäßen Manipulators, wobei die erste und zweite Antriebseinheit als Rotationsantriebe mit horizontaler Rotationsachse ausgeführt sind,
- Fig. 8: die schematische perspektivische Darstellung einer möglichen technischen Umsetzung des Manipulators gemäß Fig. 7,
- Fig. 9: eine mögliche konstruktive Ausgestaltung des passiven Arms eines gemäß Fig. 7 gestalteten Manipulators in perspektivischer Ansicht mit proximalem Glied, distalem Glied, Adapter und Roboterflansch,
- Fig. 10a: ebenfalls in perspektivischer Ansicht den passiven Arm aus Fig. 9 zusammen mit einer möglichen konstruktiven Ausgestaltung zugehöriger proximaler und distaler Zug-Druck-Elementepaare, die jeweils als Kombination von Schwinge und Lenker ausgeführt sind,
- Fig. 10b: die Anordnung aus Fig. 10a in seitlicher Ansicht, d.h. mit Blickrichtung orthogonal zur von Vertikalachse und Auskragrichtung des Querträgers aufgespannten Ebene,
- Fig. 10c: die Anordnung aus Fig. 10a und 10b in Frontalansicht, d.h. mit Blickrichtung von rechts in Fig. 10b,
- Fig. 10d: die Anordnung aus Fig. 10a, 10b und 10c in der Draufsicht, d.h. mit Blickrichtung von oben in Fig. 10c,
- Fig. 11: die schematische perspektivische Darstellung eines im Wesentlichen wie in Fig. 8 ausgeführten Manipulators mit drehbarem Werkzeug und zugehöriger auf dem Roboterflansch montierter dritter Antriebseinheit,
- Fig. 12: ein Prinzipbild eines im Wesentlichen wie in Fig. 11 ausgeführten Manipulators mit drehbarem Werkzeug sowie einer am Vertikalträger angeordneten Kamera zur Überwachung des Werkzeugeinsatzes,
- Fig. 13: die schematische perspektivische Darstellung einer möglichen technischen Umsetzung des Manipulators gemäß Fig. 12, und
- Fig. 14: die schematische perspektivische Darstellung eines ähnlich wie in Fig. 11 ausgeführten Manipulators, wobei im Unterschied hierzu jedoch die dritte Antriebseinheit am Querträger montiert und zum Drehen des Werkzeugs mit diesem über ein als Teleskop-Kardanwelle ausgebildetes Drehmoment-Übertragungselement verbunden ist.

Einander in ihrer Funktion grundsätzlich entsprechende Elemente sind in den einzelnen Figuren mit jeweils denselben Bezugszeichen versehen.

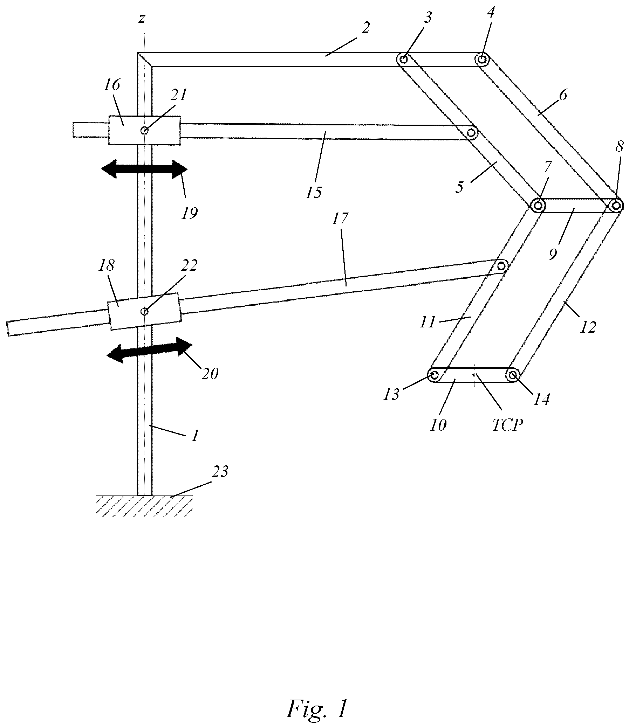

Der in Fig. 1 schematisch dargestellte Manipulator weist einen um die Vertikalachse z drehbaren Vertikalträger 1, einen von diesem auskragenden Querträger 2 und zwei an dem Querträger 2 angeordnete proximale Gelenkachsen 3, 4 auf. An der inneren proximalen Gelenkachse 3 ist die innere proximale Strebkonstruktion 5, an der äußeren proximalen Gelenkachse 4 die äußere proximale Strebkonstruktion 6 angelenkt. An den zu den jeweiligen Anlenkpunkten gegenüberliegenden Endbereichen der inneren und äußeren proximalen Strebkonstruktionen 5, 6 sind diese wiederum an der inneren bzw. äußeren Mittelgelenkachse 7, 8 angelenkt.

Der Abstand der inneren Mittelgelenkachse 7 zur äußeren Mittelgelenkachse 8 gleicht dem Abstand der inneren proximalen Gelenkachse 3 zur äußeren proximalen Gelenkachse 4 und ist durch den Adapter 9 vorgegeben, der eine mechanische steife Verbindung zwischen den Mittelgelenkachsen 7, 8 darstellt. In der Zeichenebene, die parallel zu der von Vertikalachse z und Auskragrichtung des Querträgers 2 aufgespannten Ebene verläuft, spannen die proximalen Gelenkachsen 3, 4 und Mittelgelenkachsen 7, 8 somit ein Parallelogramm auf.

An der inneren Mittelgelenkachse 7 ist die innere distale Strebkonstruktion 11, an der äußeren Mittelgelenkachse 8 die äußere distale Strebkonstruktion 12 angelenkt. An den zu den jeweiligen Anlenkpunkten gegenüberliegenden Endbereichen der inneren und äußeren distalen Strebkonstruktionen 11, 12 sind diese wiederum an der inneren bzw. äußeren distalen Gelenkachse 13, 14 angelenkt.

Der Abstand der inneren distalen Gelenkachse 13 zur äußeren distalen Gelenkachse 14 gleicht dem Abstand der inneren Mittelgelenkachse 7 zur äußeren Mittelgelenkachse 8 und ist durch den Roboterflansch 10 vorgegeben, der eine mechanische steife Verbindung zwischen den distalen Gelenkachsen 13, 14 darstellt. In der Zeichenebene, die parallel zu der von Vertikalachse z und Auskragrichtung des Querträgers 2 aufgespannten Ebene verläuft, spannen die distalen Gelenkachsen 13, 14 und Mittelgelenkachsen 7, 8 somit wiederum ein Parallelogramm auf.

An der inneren proximalen Strebkonstruktion 5 angelenkt ist das proximale Zug-Druck-Element 15, welches über die als Linearantrieb ausgeführte erste Antriebseinheit 16 in der durch einen Doppelpfeil 19 angedeuteten Richtung bewegbar ist. Gleichermaßen ist an der inneren distalen Strebkonstruktion 11 das distale Zug-Druck-Element 17 angelenkt, welches über die wiederum als Linearantrieb ausgeführte zweite Antriebseinheit 18 in der durch den entsprechenden Doppelpfeil 20 angedeuteten Richtung bewegbar ist.

Durch Bewegen der Zug-Druck-Elemente 15, 17 mittels der ersten bzw. zweiten Antriebseinheit 16, 18 lassen sich die an den Zug-Druck-Elementen 15, 17 angelenkten inneren Strebkonstruktionen 5, 11 parallel zur von der Vertikalachse z und der Auskragrichtung des Querträgers 2 aufgespannten Ebene auslenken. Die Auslenkung der inneren Strebkonstruktionen 5, 11 resultiert in einer entsprechenden Auslenkung der mittels des Adapters 9 und Robotorflansches 10 zwangsgeführten äußeren Strebkonstruktionen 6, 12.

Die erste Antriebseinheit 16 ist kippbar um die zu den Gelenkachsen 3, 4, 13, 14 parallele, horizontale erste Aufhängungsachse 21 am Vertikalträger 1 gelagert, um ein Verkanten des proximalen Zug-Druck-Elements 15 in der ersten Antriebseinheit 16 beim Auslenken der inneren proximalen Strebkonstruktion 5 zu verhindern. Gleichermaßen ist die zweite Antriebseinheit 18 kippbar um die zu den Gelenkachsen 3, 4, 13, 14 parallele, horizontale zweite Aufhängungsachse 22 am Vertikalträger 1 gelagert, um ein Verkanten des distalen Zug-Druck-Elements 17 in der zweiten Antriebseinheit 18 beim Auslenken der inneren distalen Strebkonstruktion 11 zu verhindern.

Eine weitere Antriebseinheit zum Drehen des drehbar in der Basis 23 gelagerten Vertikalträgers ist vorzugsweis außerhalb des um die Vertikalachse z schwenkbaren Manipulators in der Basis 23 angeordnet, um die beweglichen Massen d.h. insbesondere das Trägheitsmoment des Manipulators bezüglich der Vertikalachse z möglichst gering zu halten. Das zum Schwenken des Manipulators um die Vertikalachse z erforderliche Drehmoment kann beispielsweise über einen koaxial mit der Vertikalachse angeordneten Zahnkranz eingeleitet werden. Anstelle eines mechanischen Übertragungselements, wie beispielsweise eines Zahnkranzes, kann bevorzugt ein Direktantrieb vorgesehen sein, um den Vertikalträger 1 um die Vertikalachse z zu schwenken, so dass keine mechanischen Übertragungselemente (wie beispielsweise ein Zahnradgetriebe) erforderlich sind und mechanische Verluste beispielsweise aufgrund von Reibung, Getriebespiel oder Elastizität eingesetzter Bauteile vermieden werden können. Die Antriebsachse des Direktantriebs fällt dann vorteilhaft mit der Vertikalachse z zusammen. Eine derartige Anordnung nutzt vorteilhaft aus, dass aufgrund des geringen Trägheitsmoments um die Vertikalachse z nur ein relativ geringes Drehmoment zum Drehen des Vertikalträgers 1 benötigt wird.

Durch gesteuertes bzw. geregeltes Schwenken des drehfest mit dem Vertikalträger 1 verbundenen Querträgers 2 relativ zur Zeichenebene und gesteuertes bzw. - beispielsweise durch Einsatz geeigneter Servo-Antriebe - geregeltes Auslenken der Strebkonstruktionen 5, 6, 11, 12 kann der am Roboterflansch 10 befindliche Tool Center Point TCP bzw. ein dort angebrachtes Werkzeug oder Messgerät dreidimensional positioniert werden. Der Roboterflansch 10 ist über die mechanische Zwangsführung stets horizontal, d.h. parallel zur Grundfläche des Manipulators ausgerichtet.

Aufgrund der verhältnismäßig geringen beweglichen Massen des von Strebkonstruktionen 5, 6, 11, 12, Adapter 9 und Roboterflansch gebildeten passiven Arms und der in unmittelbarer Nähe zur Vertikalachse z angeordneten Massen der ersten und zweiten Antriebseinheit 16, 18 müssen zum Positionieren des Tool Center Points TCP verhältnismäßig geringe Trägheitsmomente überwunden werden, wodurch sehr kurze Positionierzeiten realisierbar sind.

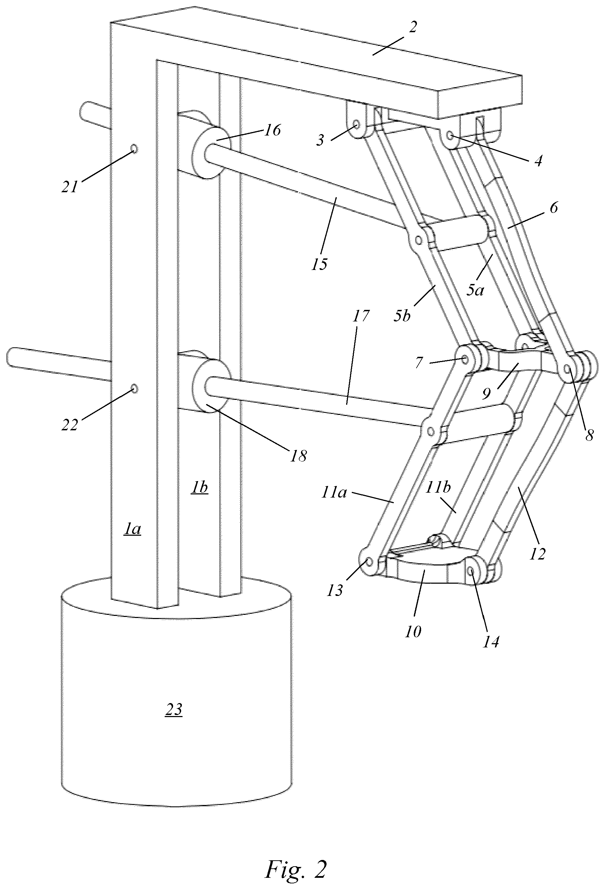

Eine mögliche vorteilhafte technischen Umsetzung des Manipulators, dessen Funktion oben anhand Fig. 1 beschrieben ist, zeigt die schematische perspektivische Darstellung in Fig. 2. Die innere proximale Strebkonstruktion 5 ist hier in Form zweier zueinander paralleler innerer proximaler Streben 5a, 5b ausgeführt. Die innere distale Strebkonstruktion 11 ist in Form zweier zueinander paralleler innerer distaler Streben 11a, 11b ausgeführt. Hierdurch sind das von innerer und äußerer proximaler Strebkonstruktion 5a, 5b, 6 gebildete proximale Glied sowie das von innerer und äußerer distaler Strebkonstruktion 11a, 11b, 12 gebildete distale Glied des passiven Arms in sich weitgehend verwindungssteif sowie biegesteif bezüglich Kräften quer zu der von der Vertikalachse z und der Auskragrichtung des Querträgers 2 aufgespannten Ebene.

Die von der Vertikalachse z aus gesehen radial jeweils weiter außen als die inneren Strebkonstruktionen 5a, 5b, 6a, 6b, 11a, 11b angeordnete äußere proximale Strebkonstruktion 6 und äußere distale Strebkonstruktion 12 sind jeweils als Einzelstrebe ausgeführt. Hierdurch wird das Trägheitsmoment für Schwenkbewegungen des Manipulators um die Vertikalachse z niedrig gehalten.

Die Anlenkungspunkte der proximalen Strebkonstruktionen 5a, 5b, 6 an den proximalen Gelenkachsen 3, 4 und Mittelegelenkachsen 7, 8 bzw. am Querträger 2 und dem y-förmigen Adapter 9 spannen ein schiefwinkliges Prisma auf, welches die Zwangsführung des proximalen Glieds des aktiven Arms vorgibt. Die Anlenkungspunkte der distalen Strebkonstruktionen 11a, 11b, 12 an den distalen Gelenkachsen 13, 14 und Mittelegelenkachsen 7, 8 bzw. am Roboterflansch und dem y-förmigen Adapter 9 spannen ein schiefwinkliges Prisma auf, welches die Zwangsführung des distalen Glieds des aktiven Arms vorgibt.

Der Vertikalträger 1 ist durch vertikale Holme 1a, 1b gebildet, zwischen denen die erste Antriebseinheit 16 und zweite Antriebseinheit 18 aufgehängt sind. Hierdurch ist die Masse der Antriebseinheiten 16 und 18 bezüglich der Vertikalachse z achsnah konzentriert, und das Trägheitsmoment bezüglich der Vertikalachse z entsprechend gering. Insbesondere durchdringt die Vertikalachse z die erste Antriebseinheit 16 und die zweite Antriebseinheit 18, und die Schwerpunkte der ersten Antriebseinheit 16 und der zweiten Antriebseinheit 18 liegen in Projektion auf eine horizontale Ebene jeweils näher an der Vertikalachse als an einem beliebigen Punkt der Außenkontur der jeweiligen Antriebseinheit. Ferner sind in keinem der vier Sektoren, die zwischen zwei beliebigen orthogonal zueinander stehenden Ebenen liegen, deren Schnittlinie mit der Vertikalachse z zusammenfällt, mehr als zwei Drittel der Masse der ersten Antriebseinheit oder mehr als zwei Drittel der Masse der zweiten Antriebseinheit 18 konzentriert. Vorzugsweise liegt der jeweilige Massenschwerpunkt der Statoren der Antriebseinheiten 16, 17 jeweils auf der Vertikalachse z.

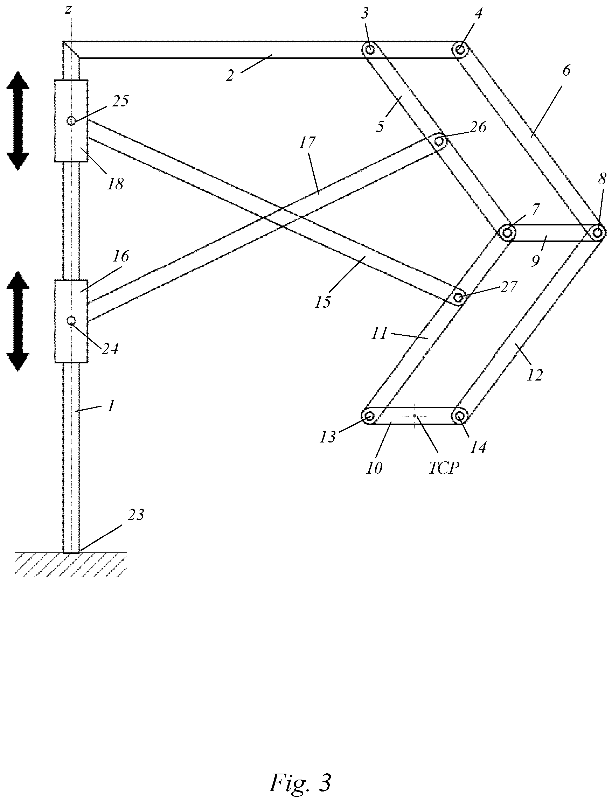

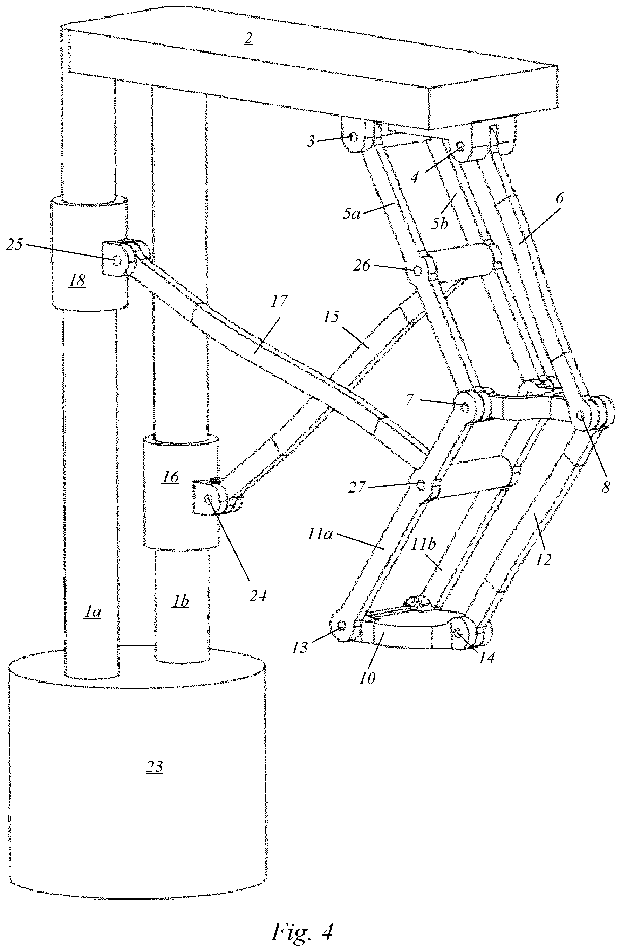

Figuren 3 und 4, erstere als Prinzipbild und letztere als schematische perspektivische Darstellung einer möglichen technischen Umsetzung, zeigen einen Manipulator, der ähnlich dem in Fig. 1 bzw. Fig. 2 dargestellten Manipulator aufgebaut ist. Insbesondere entspricht der Aufbau des passiven Armes aus innerer proximaler Strebkonstruktion 5, 5a, 5b, äußerer proximaler Strebkonstruktion 6, Adapter 9, innerer distaler Strebkonstruktion 11, 11a, 11b, äußerer distaler Strebkonstruktion 12, und Roboterflansch 10 dem Aufbau des passiven Arms in Figuren 1 und 2.

Im Unterschied zu Figuren 1 und 2 ist jedoch die erste Antriebseinheit 16 aktiv vertikal verschieblich am zweiten Holm 1b des Vertikalträgers 1, und die zweite Antriebseinheit 18 aktive vertikal verschieblich am ersten Holm 1a des Vertikalträgers 1 angebracht, wobei die aktive vertikale Verschieblichkeit der Antriebseinheiten 16, 18 durch die in diesen Antriebseinheiten 16, 18 realisierten Linearantriebe bewerkstelligt wird. Das proximale Zug-Druck-Element 15 ist mittels des lateralen Gelenks 24 an der Peripherie der ersten Antriebseinheit 16 angelenkt, das distale Zug-Druck-Element 17 mittels des lateralen Gelenks 25 an der Peripherie der zweiten Antriebseinheit 18.

Die Anlenkpunkte des proximalen Zug-Druck-Elements 15 sind Endpunkte der Hypotenuse eines gleichschenkligen Dreiecks, dessen (nicht dargestellter) dritter Eckpunkt sich vertikal oberhalb des lateralen Gelenks 24 befindet. Entsprechend sind die Anlenkpunkte des distalen Zug-Druck-Elements 17 Endpunkte der Hypotenuse eines gleichschenkligen Dreiecks, dessen (nicht dargestellter) dritter Eckpunkt sich vertikal unterhalb des lateralen Gelenks 25 befindet. Durch Verschieben der Antriebseinheiten 16 und 18 ändern sich die spitzen Winkel somit auch die Längen der (in Bezug auf das jeweilige laterale Gelenk 24, 25) Gegenkathete der so definierten rechtwinkligen Dreiecke, d.h. der horizontale Abstand der Anlenkpunkte 26, 27 der Zug-Druck-Elemente 15, 17 an den inneren Strebkonstruktionen 5, 11 vom Vertikalträger 1 verändert sich, woraus eine entsprechende Bewegung des passiven Arms des Manipulators resultiert.

Durch gesteuertes bzw. geregeltes Schwenken des drehfest mit dem Vertikalträger 1 verbundenen Querträgers 2 relativ zur Zeichenebene und gesteuertes oder, in dem dargestellten Ausführungsbeispiel durch den Einsatz von Servo-Antrieben, geregeltes Auslenken der Strebkonstruktionen 5, 6, 11, 12 kann der am Roboterflansch 10 befindliche Tool Center Point TCP bzw. ein dort angebrachtes Werkzeug oder Messgerät wiederum dreidimensional positioniert werden. Der Roboterflansch 10 ist über die mechanische Zwangsführung stets horizontal, d.h. parallel zur Grundfläche des Manipulators ausgerichtet.

Aufgrund der verhältnismäßig geringen beweglichen Massen des von Strebkonstruktionen 5, 6, 11, 12, Adapter 9 und Roboterflansch gebildeten passiven Arms und der in unmittelbarer Nähe zur Vertikalachse z angeordneten Massen der ersten und zweiten Antriebseinheit 16, 18 müssen zum Positionieren des Tool Center Points TCP verhältnismäßig geringe Trägheitsmomente überwunden werden, wodurch sehr kurze Positionierzeiten realisierbar sind.

Im Unterschied zum Ausführungsbeispiel der Figuren 1 und 2 müssen die Antriebseinheiten 16, 18 nicht kippbar am Vertikalträger 1 gelagert werden. Dafür verläuft die Vertikalachse z außerhalb der Antriebseinheiten 16, 18. Dennoch können die Massen der Antriebseinheiten 16, 18 in Bezug auf die Vertikalachse z noch zumindest so achsnah angeordnet werden, dass der horizontale Abstand zwischen dem Schwerpunkt der ersten Antriebseinheit 16 und der Vertikalachse z sowie der horizontale Abstand zwischen dem Schwerpunkt der zweiten Antriebseinheit 18 und der Vertikalachse z geringer ist als die Hälfte, vorzugsweise als ein Drittel, des horizontalen Abstandes zwischen der inneren proximalen Gelenkachse 3 und der Vertikalachse z.

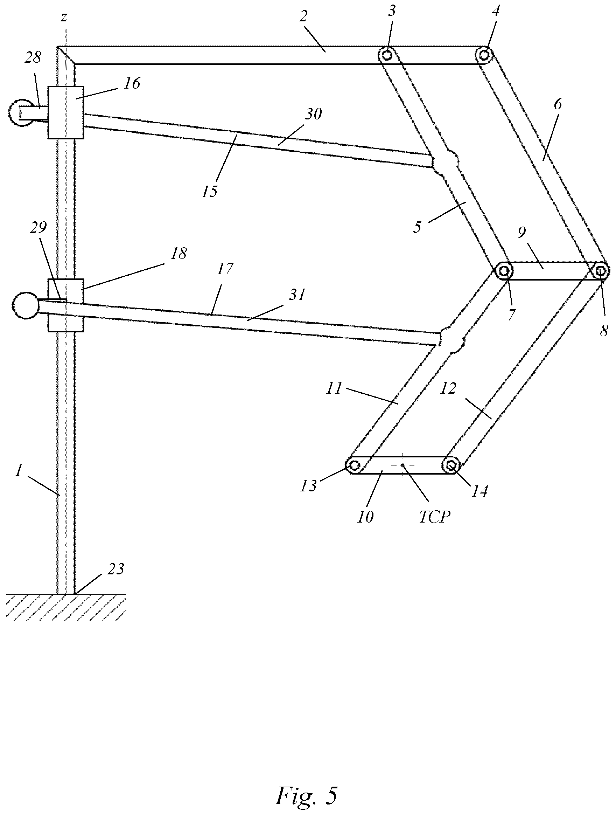

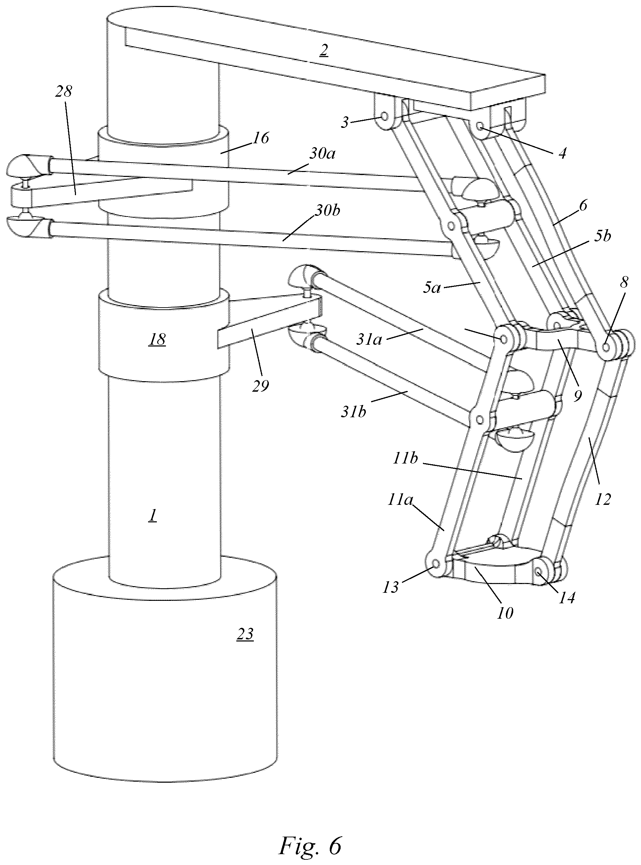

Figuren 5 und 6, erstere als Prinzipbild und letztere als schematische perspektivische Darstellung einer möglichen technischen Umsetzung, zeigen einen Manipulator, der ähnlich den in Fig. 1 bzw. Fig. 2 sowie Fig. 3 bzw. Fig. 4 dargestellten Manipulatoren aufgebaut ist. Insbesondere entspricht der Aufbau des passiven Armes aus innerer proximaler Strebkonstruktion 5, 5a, 5b, äußerer proximaler Strebkonstruktion 6, Adapter 9, innerer distaler Strebkonstruktion 11, 11a, 11b, äußerer distaler Strebkonstruktion 12, und Roboterflansch 10 dem Aufbau des passiven Arms in Figuren 1, 2, 3 und 4.

Im Unterschied zu Figuren 1 und 2 sind jedoch die erste Antriebseinheit 16 und zweite Antriebseinheit 18 als Rotationsantriebe ausgeführt, die eine koaxial mit der Vertikalachse z gelagerte erste Schwinge 28 bzw. eine ebenfalls koaxial mit der Vertikalachse z gelagerte zweite Schwinge 29 antreiben. Exzentrisch an der ersten Schwinge 28 sowie an der inneren proximalen Strebkonstruktion 5, 5a, 5b angelenkt ist der proximale (Doppel-)Lenker 30, 30a, 30b. Exzentrisch an der zweiten Schwinge 29 sowie an der inneren distalen Strebkonstruktion 11, 11a, 11b angelenkt ist der distale (Doppel-)Lenker 31, 31a, 31b. Die erste Schwinge 28 und der der proximale (Doppel-)Lenker 30, 30a, 30b bilden somit das proximale Zug-Druck-Element 15, die zweite Schwinge 29 und der der distale (Doppel-)Lenker 31, 31a, 31b das distale Zug-Druck-Element 17. Die Lagerung der einzelnen Elemente 30a, 30b, 31a, 31b der beiden Doppellenker an der entsprechenden Schwinge 28, 29 und inneren Strebkonstruktion 5, 11 ist dabei jeweils mittels Kugelgelenken realisiert.

Durch gesteuertes bzw. geregeltes Schwenken des drehfest mit dem Vertikalträger 1 verbundenen Querträgers 2 relativ zur Zeichenebene und gesteuertes bzw. geregeltes Auslenken der Strebkonstruktionen 5, 6, 11, 12 kann der am Roboterflansch 10 befindliche Tool Center Point TCP bzw. ein dort angebrachtes Werkzeug oder Messgerät wiederum dreidimensional positioniert werden. Der Roboterflansch 10 ist über die mechanische Zwangsführung stets horizontal, d.h. parallel zur Grundfläche des Manipulators ausgerichtet.

Aufgrund der verhältnismäßig geringen beweglichen Massen des von Strebkonstruktionen 5, 6, 11, 12, Adapter 9 und Roboterflansch gebildeten passiven Arms und der in unmittelbarer Nähe zur Vertikalachse z angeordneten Massen der ersten und zweiten Antriebseinheit 16, 18 müssen zum Positionieren des Tool Center Points TCP verhältnismäßig geringe Trägheitsmomente überwunden werden, wodurch sehr kurze Positionierzeiten realisierbar sind.

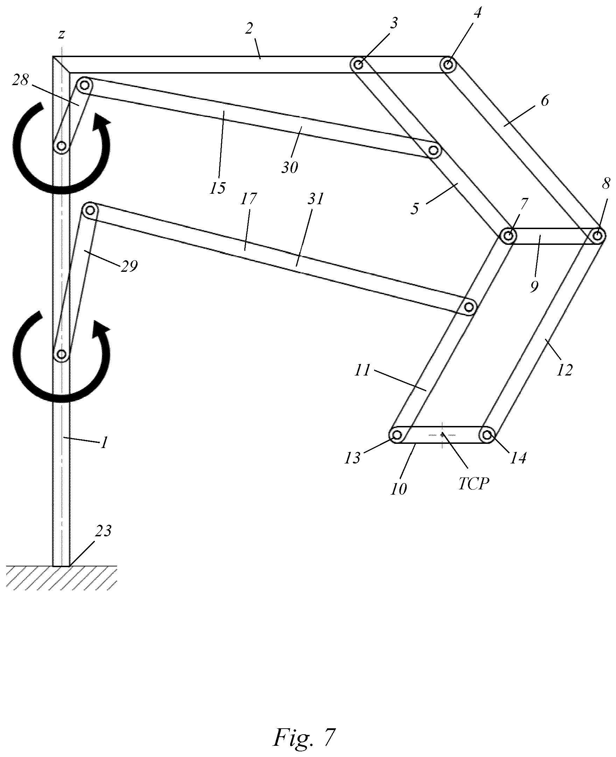

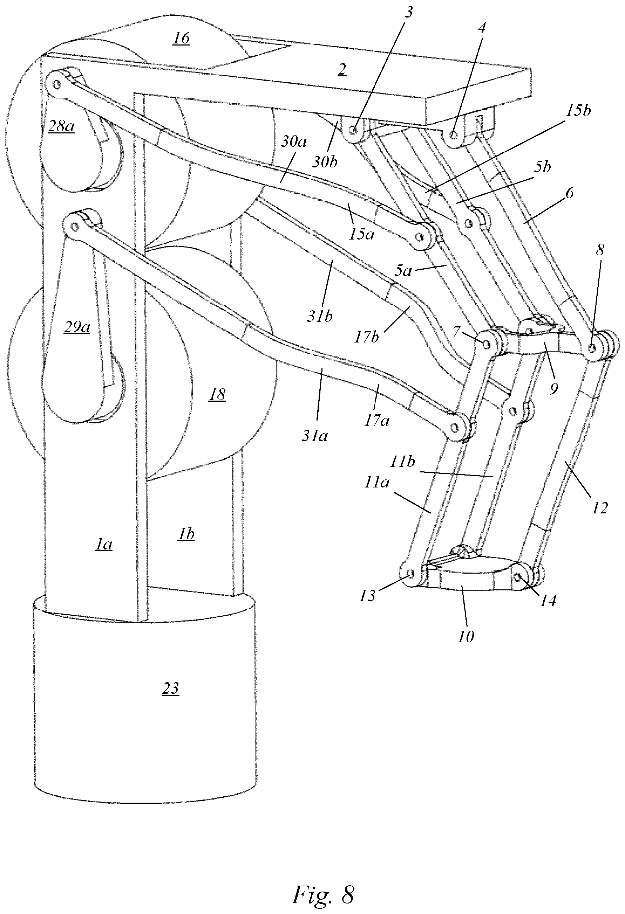

Figuren 7 und 8, erstere wiederum als Prinzipbild und letztere als schematische perspektivische Darstellung einer möglichen technischen Umsetzung, zeigen einen Manipulator, der ähnlich den in Fig. 1 bzw. Fig. 2, Fig. 3 bzw. Fig. 4 sowie Fig. 5 bzw. Fig. 6 dargestellten Manipulatoren aufgebaut ist. Ein Unterschied hierzu besteht wiederum in der Anordnung der ersten und zweiten Antriebseinheit 16, 18, die beim vorliegenden Ausführungsbeispiel wie unten geschildert als Rotationsantriebe mit horizontalen Antriebsachsen ausgeführt sind.

Der Manipulator weist wiederum einen mittels einer weiteren Antriebseinheit um die Vertikalachse z drehbar an der Basis 23 gelagerten Vertikalträger 1, einen mit diesem drehfest verbundenen und von diesem auskragenden Querträger 2 und zwei an dem Querträger 2 angeordnete proximale Gelenkachsen 3, 4 auf. An der inneren proximalen Gelenkachse 3 ist die innere proximale Strebkonstruktion 5, an der äußeren proximalen Gelenkachse 4 die äußere proximale Strebkonstruktion 6 angelenkt. An den zu den jeweiligen Anlenkpunkten gegenüberliegenden Endbereichen der inneren und äußeren proximalen Strebkonstruktionen 5, 6 sind diese wiederum an der inneren bzw. äußeren Mittelgelenkachse 7, 8 angelenkt.

Der Adapter 9 stellt eine mechanische steife Verbindung zwischen den Mittelgelenkachsen 7, 8 dar und legt den Abstand der inneren Mittelgelenkachse 7 zur äußeren Mittelgelenkachse 8 fest, so dass dieser dem Abstand der inneren proximalen Gelenkachse 3 zur äußeren proximalen Gelenkachse 4 entspricht. In der Zeichenebene, die parallel zu der von Vertikalachse z und Auskragrichtung des Querträgers 2 aufgespannten Ebene verläuft, spannen die proximalen Gelenkachsen 3, 4 und Mittelgelenkachsen 7, 8 somit ein Parallelogramm auf.

An der inneren Mittelgelenkachse 7 ist die innere distale Strebkonstruktion 11, an der äußeren Mittelgelenkachse 8 die äußere distale Strebkonstruktion 12 angelenkt. An den zu den jeweiligen Anlenkpunkten gegenüberliegenden Endbereichen der inneren und äußeren distalen Strebkonstruktionen 11, 12 sind diese wiederum an der inneren bzw. äußeren distalen Gelenkachse 13, 14 angelenkt.

Der Abstand der inneren distalen Gelenkachse 13 zur äußeren distalen Gelenkachse 14 gleicht wiederum dem Abstand der inneren Mittelgelenkachse 7 zur äußeren Mittelgelenkachse 8 und ist durch den Roboterflansch 10 vorgegeben, der eine mechanische steife Verbindung zwischen den distalen Gelenkachsen 13, 14 darstellt. In der Zeichenebene, die parallel zu der von Vertikalachse z und Auskragrichtung des Querträgers 2 aufgespannten Ebene verläuft, spannen die distalen Gelenkachsen 13, 14 und Mittelgelenkachsen 7, 8 somit wiederum ein Parallelogramm auf.

An der inneren proximalen Strebkonstruktion 5 angelenkt ist das proximale Zug-Druck-Element 15, welches über die als Rotationsantrieb ausgeführte erste Antriebseinheit 16 (in Fig. 7 nicht dargestellt) bewegbar ist. Gleichermaßen ist an der inneren distalen Strebkonstruktion 11 das distale Zug-Druck-Element 17 angelenkt, welches über die wiederum als Rotationsantrieb ausgeführte zweite Antriebseinheit 18 (in Fig. 7 nicht dargestellt) bewegbar ist. In Figur 7 dargestellt sind lediglich die Rotationsachse 32 der ersten Antriebseinheit 16 und die Rotationsachse 33 der zweiten Antriebseinheit 18, welche beide horizontal und orthogonal zur von der Vertikalachse und der Auskragrichtung des Querträgers 2 aufgespannten Ebene stehen. Auf der Rotationsachse 32 der ersten Antriebseinheit 16 gelagert und von dieser in Drehung versetzbar ist der Schwingenabschnitt 28 des proximalen Zug-Druck-Elements 15. Ein exzentrisch am Schwingenabschnitt 28 und an der inneren proximalen Strebkonstruktion 5 angelenkter Lenkerabschnitt 30 des proximalen Zug-Druck-Elements 15 überträgt eine zur Auskragrichtung des Querträgers 2 parallele Kraftkomponente auf die innere proximale Strebkonstruktion 5. Auf der Rotationsachse 33 der zweiten Antriebseinheit 18 gelagert und von dieser in Drehung versetzbar ist der Schwingenabschnitt 29 des distalen Zug-Druck-Elements 17. Ein exzentrisch am Schwingenabschnitt 29 und an der inneren distalen Strebkonstruktion 11 angelenkter Lenkerabschnitt 31 des proximalen Zug-Druck-Elements 15 überträgt eine zur Auskragrichtung des Querträgers 2 parallele Kraftkomponente auf die innere distale Strebkonstruktion 11.

Werden die inneren Strebkonstruktionen 5, 11 wie in Fig. 8 dargestellt jeweils als Strebenpaar 5a, 5b bzw. 11a, 11b und die äußeren Strebkonstruktionen 6, 12 jeweils als Einzelstrebe ausgeführt, so spannen die Anlenkungspunkte der proximalen Strebkonstruktionen 5a, 5b, 6 an den proximalen Gelenkachsen 3, 4 (bzw. am Querträger 2) und an den Mittelegelenkachsen 7, 8 (bzw. am Adapter 9) ein schiefwinkliges Prisma auf, und die Anlenkungspunkte der distalen Strebkonstruktionen 11a, 11b, 12 an den distalen Gelenkachsen 13, 14 (bzw. am Roboterflansch 10) und an den Mittelegelenkachsen 7, 8 (bzw. am Adapter 9) spannen ebenfalls ein schiefwinkliges Prisma auf.

Vorteilhaft kann dann die Kraftübertragung von den Antriebseinheiten 16, 18 auf die Glieder des aktiven Arms mittels Zug-Druck-Elementepaaren 15a, 15b, 17a, 17b erfolgen, wie ebenfalls in Fig. 8 dargestellt.

Die erste Antriebseinheit 16 treibt ein erstes Schwingenpaar an, von welchem in Fig. 8 nur eine Schwinge 28a sichtbar ist. Ein exzentrisch an dem ersten Schwingenpaar und an dem inneren proximalen Strebenpaar 5a, 5b angelenktes Lenkerpaar 30a, 30b überträgt Zug- bzw. Druckkräfte auf das innere proximale Strebenpaar 5a, 5b und somit auf das proximale Glied des passiven Arms des Manipulators.

Die zweite Antriebseinheit 18 treibt ein zweites Schwingenpaar an, von welchem in Fig. 8 wiederum nur eine Schwinge 29a sichtbar ist. Ein exzentrisch an dem zweiten Schwingenpaar und an dem inneren distalen Strebenpaar 11a, 11b angelenktes Lenkerpaar 30a, 30b überträgt Zug- bzw. Druckkräfte auf das innere proximale Strebenpaar 5a, 5b und somit auf das distale Glied des passiven Arms des Manipulators.

Die erste und zweite Antriebseinheit 16, 18 sind in Fig. 8 zwischen den Vertikalholmen 1a, 1b angebracht, die den Vertikalträger 1 bilden. Hierdurch ist die Masse der Antriebseinheiten 16 und 18 bezüglich der Vertikalachse z achsnah konzentriert, und das Trägheitsmoment bezüglich der Vertikalachse z entsprechend gering. Insbesondere durchdringt die Vertikalachse z die erste Antriebseinheit 16 und die zweite Antriebseinheit 18, und die Schwerpunkte der ersten Antriebseinheit und der zweiten Antriebseinheit liegen in Projektion auf eine horizontale Ebene jeweils näher an der Vertikalachse als an einem beliebigen Punkt der Außenkontur der jeweiligen Antriebseinheit. Ferner sind in keinem der vier Sektoren, die zwischen zwei beliebigen orthogonal zueinander stehenden Ebenen liegen, deren Schnittlinie mit der Vertikalachse z zusammenfällt, mehr als zwei Drittel der Masse der ersten Antriebseinheit oder mehr als zwei Drittel der Masse der zweiten Antriebseinheit konzentriert.

Die Antriebseinheiten 16, 18 können jeweils vorteilhaft als Direktantrieb ausgebildet sein, an dessen Abgang die jeweilige Schwinge 28a, 28b, 29a, 29b unmittelbar drehfest verbunden ist. Der Rotor des jeweiligen Direktantriebs kann dabei als Hohlwelle innerhalb eines Stators ausgeführt sein. Die Bewegung des jeweiligen Rotors relativ zum jeweiligen Stator ist über ein Winkelmessgerät erfassbar, das auch in Segmentausführung vorgesehen sein kann.

Durch gesteuertes bzw. geregeltes Schwenken des drehfest mit dem Vertikalträger 1 verbundenen Querträgers 2 relativ zur Zeichenebene und gesteuertes Auslenken der Strebkonstruktionen 5, 6, 11, 12 kann der am Roboterflansch 10 befindliche Tool Center Point TCP bzw. ein dort angebrachtes Werkzeug oder Messgerät wiederum dreidimensional positioniert werden. Der Roboterflansch 10 ist über die mechanische Zwangsführung stets horizontal, d.h. parallel zur Grundfläche des Manipulators ausgerichtet.

Aufgrund der verhältnismäßig geringen beweglichen Massen des von Strebkonstruktionen 5, 6, 11, 12, Adapter 9 und Roboterflansch gebildeten passiven Arms und der in unmittelbarer Nähe zur Vertikalachse z angeordneten Massen der ersten und zweiten Antriebseinheit 16, 18 müssen zum Positionieren des Tool Center Points TCP verhältnismäßig geringe Trägheitsmomente überwunden werden, wodurch sehr kurze Positionierzeiten realisierbar sind. Der Manipulator umfasst dabei wiederum einen bevorzugt als Direktantrieb ausgebildeten Antrieb zum Drehen des Vertikalträgers 1 um die Vertikalachse z; dieser Direktantrieb ist in den Figuren nicht eigens dargestellt.

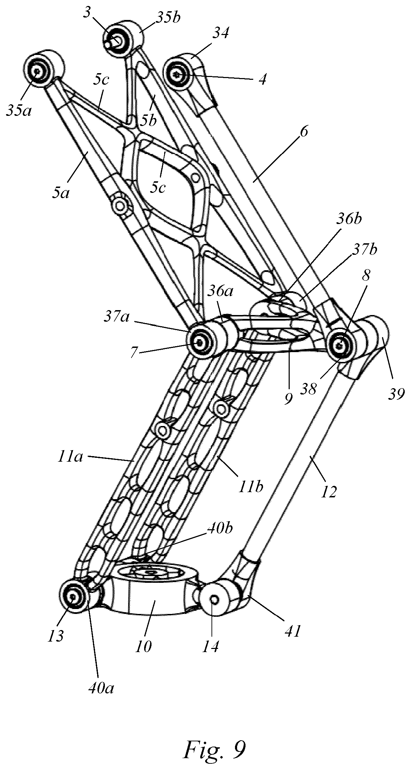

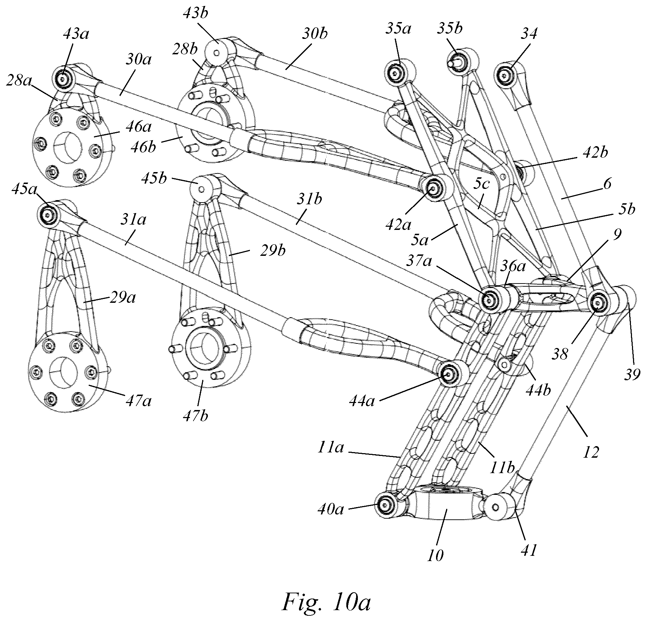

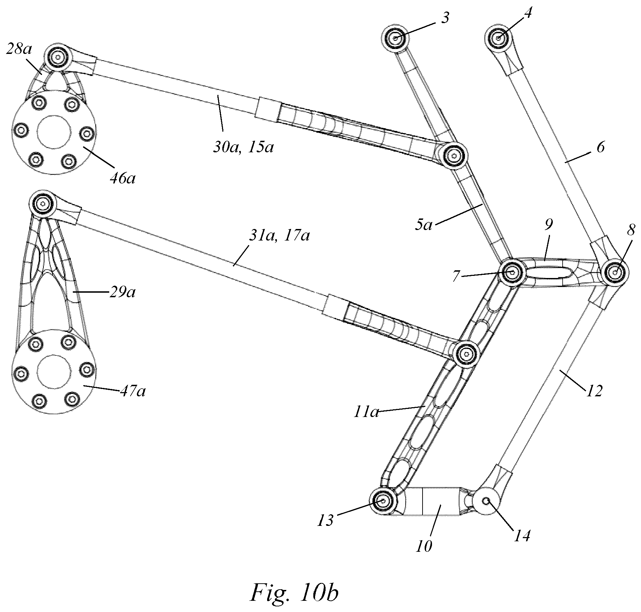

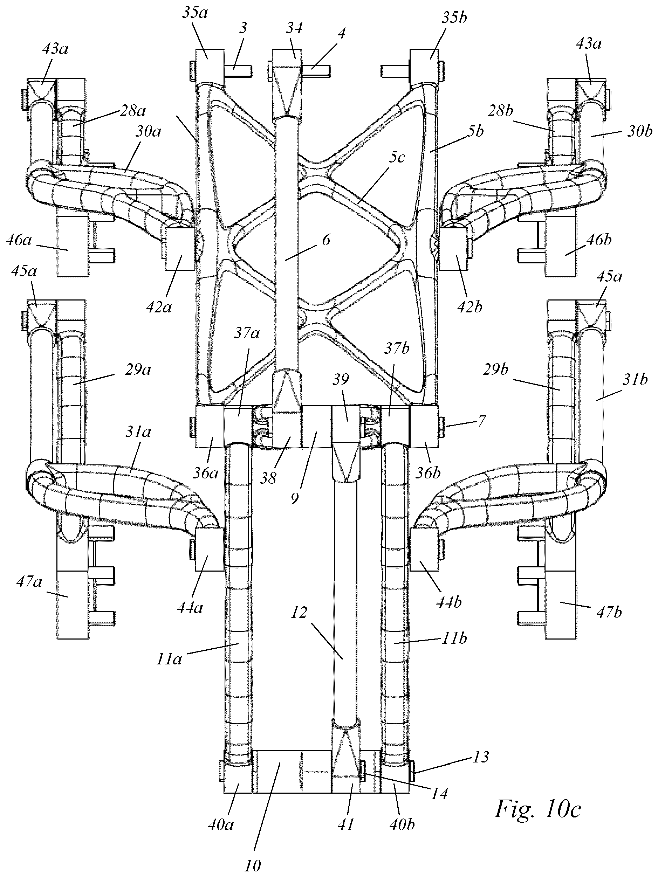

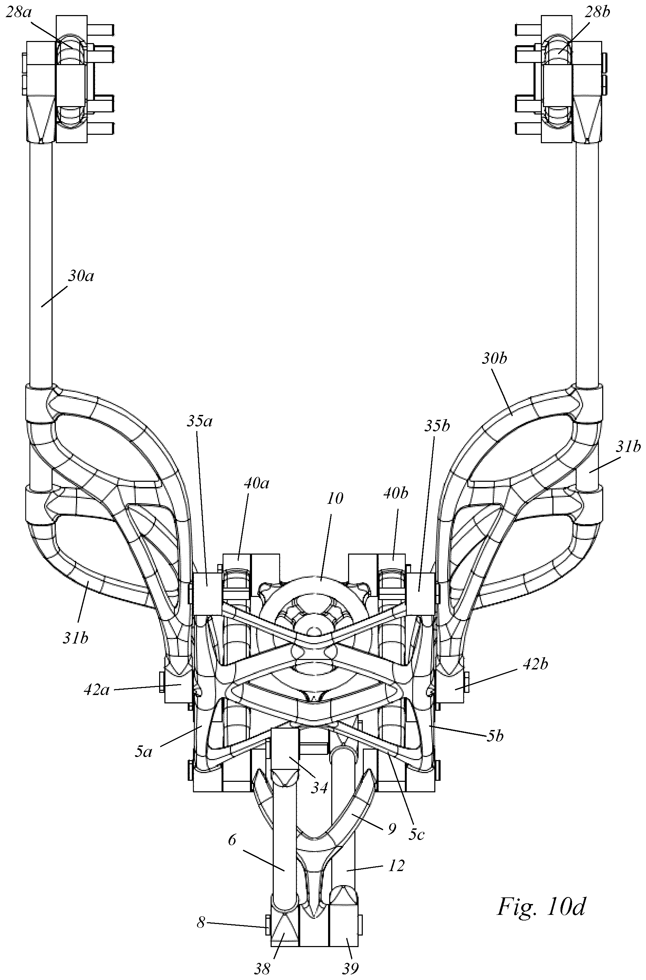

Fig. 9 zeigt eine mögliche konstruktive Ausgestaltung des passiven Arms eines gemäß Fig. 7 und ähnlich Fig. 8 gestalteten Manipulators in perspektivischer Ansicht. Fig. 10a zeigt (ebenfalls in perspektivischer Ansicht) den passiven Arm aus Fig. 9 zusammen mit einer möglichen konstruktiven Ausgestaltung zugehöriger proximaler und distaler Zug-Druck-Elementepaare 15a, 15b, 17a, 17b, die jeweils als Kombination von Schwinge 28a, 28b, 29a, 29b und Lenker 30a, 30b, 31a, 31b ausgeführt sind. Fig. 10b zeigt die Anordnung aus Fig. 10a in seitlicher Ansicht, d.h. mit Blickrichtung orthogonal zur von Vertikalachse z und Auskragrichtung des Querträgers 2 aufgespannter Ebene, Fig. 10c in Frontalansicht, d.h. mit Blickrichtung von rechts in Fig. 10b, und Fig. 10d in der Draufsicht, d.h. mit Blickrichtung von oben in Fig. 10c.

Die innere proximale Strebkonstruktion 5 weist zwei über fachwerkartige Querstreben 5c miteinander verbundene Längsstreben 5a, 5b auf. Mittels Schrägkugellagern 35a, 35b werden die inneren proximalen Längsstreben 5a, 5b auf der inneren proximalen Gelenkachse 3 am Querträger 2 gelagert. Die Lagerung der inneren proximale Längsstreben 5a, 5b auf der inneren Mittelgelenkachse 7 am y-förmigen Adapter 9 erfolgt ebenfalls mittels Schrägkugellagern 36a, 36b. Die als Einzelstrebe ausgeführte äußere proximale Strebkonstruktion 6 ist gleichsam mittels Schrägkugellagern 34, 38 auf der äußeren proximalen Gelenkachse 4 am Querträger 2 und auf der äußeren Mittelgelenkachse 8 am y-förmigen Adapter 9 gelagert.

Die innere distale Strebkonstruktion 11 weist zwei Längsstreben 11a, 11b auf, die zur Verbesserung ihrer Steifigkeit parallel zu der von der Vertikalachse z und der Auskragrichtung des Querträgers 2 aufgespannten Ebene verbreitert, jedoch zur Masseeinsparung mit Aussparungen versehen sind. Mittels Schrägkugellagern 40a, 40b werden die inneren distalen Längsstreben 11a, 11b auf der inneren Mittelgelenkachse 7 am Adapter 9 gelagert. Die Lagerung des Roboterflanschs 10 an den inneren distalen Längsstreben 11a, 11b auf der inneren distalen Gelenkachse 13 erfolgt ebenfalls mittels Schrägkugellagern 40a, 40b. Die als Einzelstrebe ausgeführte äußere distale Strebkonstruktion 12 ist gleichsam mittels Schrägkugellagern 39, 41 auf der äußeren distalen Gelenkachse 14 am Roboterflansch 10 und auf der äußeren Mittelgelenkachse 8 am y-förmigen Adapter 9 gelagert.

Es werden dabei jeweils zwei einreihige Schrägkugellager 34, 35a, 35b, 36a, 36b, 37a, 37b, 38, 39, 40a, 40b, 41 je Lagerstelle verwendet. Diese werden über eine Lagerwellenschraube an den Innenringen vorgespannt, um das Lagerspiel zu reduzieren.

Gleiches gilt für die Schrägkugellager 42a, 42b, 43a, 43b, mit welchen die äußeren Enden der proximalen Lenker 30a, 30b jeweils mittig an den inneren proximalen Längsstreben 5a, 5b und die inneren Enden der proximalen Lenker 30a, 30b jeweils exzentrisch an den Schwingen 28a, 28b angelenkt sind, sowie für die Schrägkugellager 44a, 44b, 45a, 45b, mit welchen die äußeren Enden der distalen Lenker 31a, 31b jeweils an den inneren distalen Längsstreben 11a, 11b und die inneren Enden der distalen Lenker 31a, 31b jeweils exzentrisch an den Schwingen 29a, 29b angelenkt sind.

Die Schwingen 28a, 28b des proximalen Zug-Druck-Elementepaars 15 sind über den jeweiligen Flansch 46a, 46b verdrehfest mit dem Rotationsantrieb der ersten Antriebseinheit 16 verbindbar, und die Schwingen 29a, 29b des distalen Zug-Druck-Elementepaars 17 über den jeweiligen Flansch 47a, 47b mit dem Rotationsantrieb der zweiten Antriebseinheit 18.

Zur Erhöhung der Verwindungssteifigkeit der Lenker 30a, 30b, 31a, 31b sind diese doppelt gegabelt und hierdurch abschnittsweise doppelstrebig ausgeführt.

Die Schwingen 28a, 28b, 29a, 29b können vorteilhaft aus einer Aluminiumlegierung gefertigt werden, die Zug-Druck-Stäbe der Lenker 30a, 30b, 31a, 31b aus Kohlenstofffaser-verstärktem Kunststoff (CFK). Der Fachmann wird aber je nach Anwendung auch auf andere geeignete Werkstoffe zurückgreifen können.

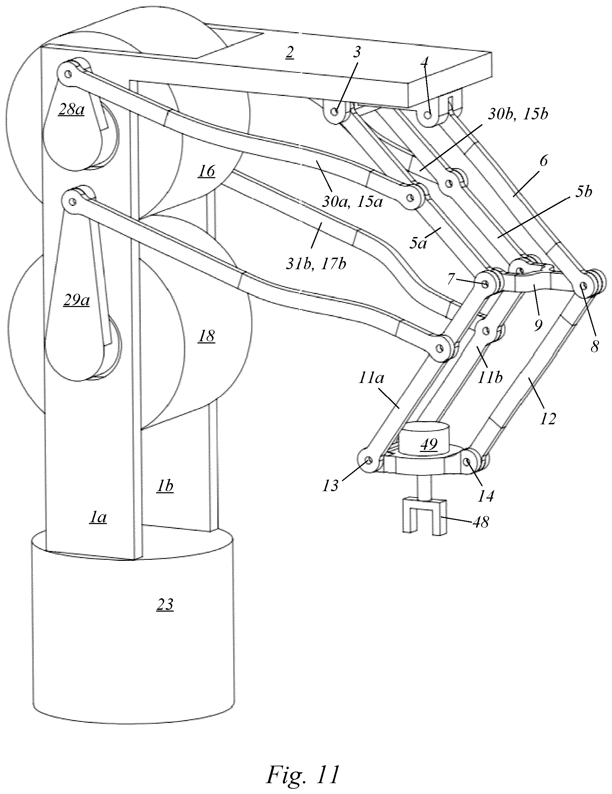

Fig. 11 zeigt in schematisch perspektivischer Darstellung einen im Wesentlichen wie in Fig. 8 ausgeführten Manipulator. Zusätzlich ist hier allerdings ein Werkzeug 48 auf dem Roboterflansch 10 montiert. Mittels der ebenfalls auf dem Roboterflansch 10 montierten dritten Antriebseinheit 49 ist das Werkzeug 48 drehbar bzw. orientierbar.

Da der Roboterflansch 10 aufgrund der mechanische Zwangsführung des passiven Arms mittels der beiden schiefwinkligen Prismen stets horizontal, d.h. parallel zur Grundfläche des Manipulators ausgerichtet ist, steht die Drehachse des Werkzeugs 48 stets vertikal.

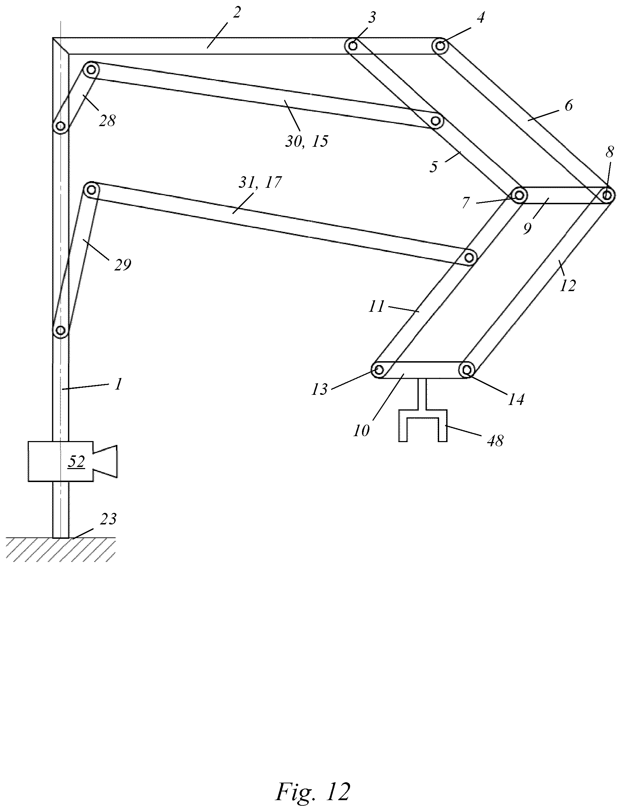

Fig. 12 zeigt ein Prinzipbild eines im Wesentlichen wie in Fig. 11 ausgeführten Manipulators mit drehbarem Werkzeug 48 sowie einer am Vertikalträger angeordneten und somit in den kinematischen Aufbau des Manipulators integrierte Kamera 52 zur Überwachung des Werkzeugeinsatzes. Die Kamera 52 ist dabei konzentrisch mit der Vertikalachse z am Vertikalträger 1 angebracht und so ausgerichtet, dass ihre optische Achse in Richtung des als Greifer ausgebildeten Werkzeugs 48 zeigt. Der Greifer 48 ist am Roboterflansch 10 angebracht.

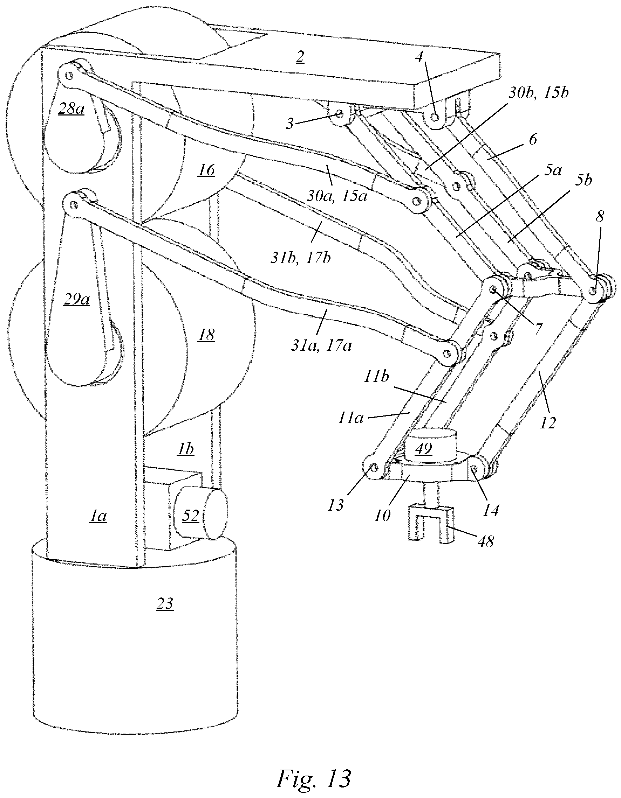

Fig. 13 zeigt eine schematische perspektivische Darstellung einer möglichen technischen Umsetzung des Manipulators gemäß Fig. 12. Der Aufbau mit den zwei vertikalen Holmen 1a, 1b erlaubt es, die Kamera 52 dazwischen im Vertikalträger 1 anzubringen. Wird ein Werkstück mittels des Greifers 48 gegriffen, kann der Greifer 48 nahe an bzw. in der optischen Achse der Kamera 52 positioniert werden. Über die dritte Antriebseinheit 49 kann die Orientierung des Greifers 48 vorgegeben werden.

Dies ermöglicht den folgenden Ablauf: Ein Werkstück wird mit dem Greifer 48 aufgenommen. Der Manipulator positioniert das Werkstück durch geeignete Auslenkung des passiven Arms mittels der ersten und zweiten Antriebseinheit 16, 18 in der optischen Achse der Kamera 52.

Der Manipulator orientiert das Werkstück mit Hilfe der dritten Antriebseinheit 49. Mittels einer Bewegung durch die Antriebseinheit in der Basis 23 kann das Werkstückstück an seine Zielposition herangeführt werden. Während dieser Schwenkbewegung kann die Kamera 52 eine Bildaufnahme durchführen. Die Pose des Werkstücks ist dabei konstant in Bezug auf die Kamera 52. Die Zielpose kann mit Hilfe der ersten, zweiten und dritten Antriebseinheit 16, 18, 49 angefahren werden. Somit ist eine kontinuierliche Bewegung des Werkstücks möglich, ohne dass der Manipulator das Werkstück an eine Prüfposition in der Produktionsanlage führen bzw. dort anhalten müsste. Die Taktzeit kann entsprechend verkürzt werden.

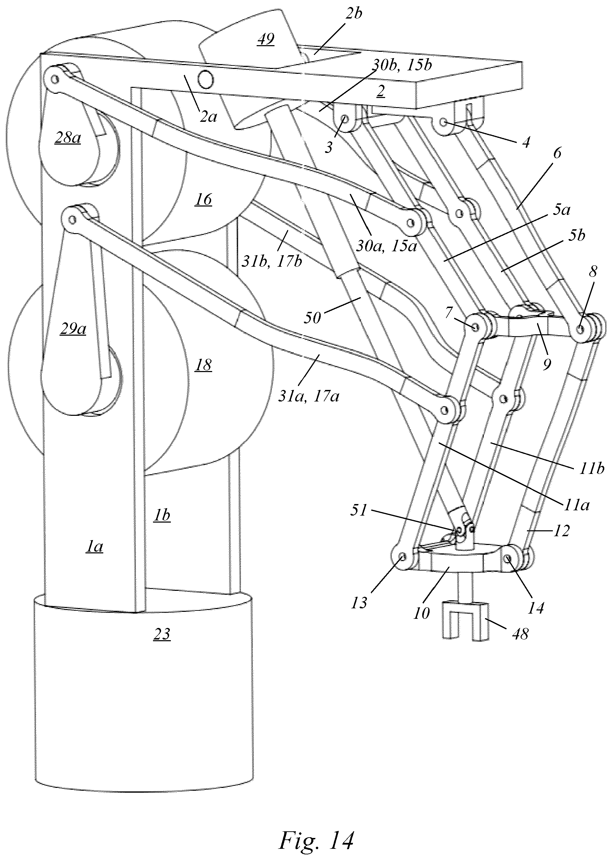

In Fig. 14 ist ein ähnlich wie in Fig. 11 ausgeführter Manipulator in schematischer perspektivischer Darstellung gezeigt. Insbesondere sind die Strebkonstruktionen 5a, 5b, 6, 11a, 11b und 12 des passiven Arms wie in Fig. 11 angeordnet und mittels der Antriebseinheiten 16 und 18 über die Zug-Druck-Elementpaare 15a, 15b, 17a, 17b mit den Lenkern 30a, 30b, 31a, 31b ausrichtbar.

Das Werkzeug 48 ist wiederum drehbar auf dem Roboterflansch 10 montiert. Im Unterschied zu Fig. 11 ist die zugehörige dritte Antriebseinheit 49 jedoch am Querträger 2 und näher an der Vertikalachse z des Vertikalträgers 1 angebracht. Das Drehmoment der dritten Antriebseinheit 49 wird dabei über die Welle 50 mit Kardangelenk 51 zum Werkzeug 48 übertragen. Um zu verhindern, dass sich dieser Antriebsstrang beim Verstellen der Glieder des passiven Arms verspannt, ist die Welle 50 als Teleskopwelle ausgeführt und die dritte Antriebseinheit 49 um die zu den Gelenkachsen 3, 4, 13, 14 und Mittelgelenkachsen 7, 8 parallele Achse 52 kippbar zwischen zwei Holmen 2a, 2b des Querträgers 2 aufgehängt. Anstatt die dritte Antriebseinheit 49 kippbar aufzuhängen, kann diese auch feststehend am Querträger 2 montiert und ein weiteres Kardangelenk in der Welle 50 vorgesehen werden.

Durch die Anordnung der dritten Antriebseinheit 49 in geringerem radialen Abstand zur Vertikalachse z des Vertikalträgers 1 ist gegenüber der Ausführungsform der Fig. 11 das Trägheitsmoment zum Verschwenken des Manipulators weiter vermindert.

Noch weiter lässt sich das Trägheitsmoment des Manipulators bezüglich der Vertikalachse z reduzieren, indem man die vertikalen Holme 1a, 1b gegenüber Fig. 14 nach oben verlängert und die dritte Antriebseinheit 49 bei gleichzeitiger Verlängerung der Welle 50 oberhalb der ersten Antriebseinheit 16 zwischen den vertikalen Holmen 1a, 1b montiert.

Die vorstehend beschriebenen Manipulatoren können jeweils als Teil eines nicht weiter dargestellten Roboteraufbaus ausgebildet sein und beispielsweise angesteuert werden, um als sogenannter *High-Speed-Picker* Kleinteile an einem ersten Ort zu ergreifen, dann eine Schwenkbewegung um die Vertikalachse z auszuführen und die gegriffenen Kleinteile an einem zweiten Ort abzulegen. Das Kleinteil bzw. ein entsprechendes Werkstück kann dabei, ohne darauf beschränkt zu sein, ein Steckergehäuse, ein Kontaktteil oder ein Kontaktträger und somit insbesondere für die Konfektionierung von Kabeln vorgesehen sein. Das aufgegriffene Kleinteil bzw. Werkstück wird während der Schwenkbewegung um die Vertikalachse z in eine definierte Position orientiert und in dieser definierten Position abgelegt. Der vorbeschriebene Roboteraufbau wiederum kann Teil einer automatisierten, insbesondere auch modular aufgebauten Kabelverarbeitungsanlage sein, bei der an einer Station Kleinteile insbesondere als Schüttgut vorgelegt werden, und das jeweilige, von dem Manipulator gegriffene Kleinteil in der definierten Position einem abgemantelten, zwischen-bearbeiteten Kabelende für die weitere Bearbeitung bereitgestellt wird. Der vorbeschriebene Manipulator wird dabei zyklisch zwischen einer Ausgangsstellung und einer Endstellung hin- und herbewegt und dazu periodisch, mit einer kurzen Taktzeit von ca. vier oder weniger Sekunden um die Vertikalachse z hin- und hergeschwenkt, während der auch das aufgenommene Kleinteil durch geeignete Ansteuerung passend orientiert wird.

Für derartige und ähnliche Anwendungen kann eine Steuerungstechnik eingesetzt werden, die eine definierte kartesische Trajektorie für die TCP-Bewegung erstellt, die Trajektorie über die inverse Kinematik in gelenkspezifische Bewegungen überführt und die entsprechenden Sollpositionen an einen sogenannten *Motion Controller* übergibt, der die entsprechende Regelung der Antriebseinheiten übernimmt.

## Patentansprüche

1. Manipulator, aufweisend
einen um eine Vertikalachse (z) drehbaren Vertikalträger (1),
einen mit dem Vertikalträger (1) mitdrehend verbundenen, vom Vertikalträger (1) auskragenden Querträger (2),
eine am Querträger (2) angeordnete, vom Vertikalträger (1) beabstandete innere proximale Gelenkachse (3),
eine am Querträger (2) angeordnete, vom Vertikalträger weiter als die innere proximale Gelenkachse (3) beabstandete äußere proximale Gelenkachse (4),
eine innere proximale Strebkonstruktion (5), die einen an der inneren proximalen Gelenkachse (3) angelenkten proximalen Endbereich und einen distalen Endbereich aufweist,
eine äußere proximale Strebkonstruktion (6), die einen an der äußeren proximalen Gelenkachse (4) angelenkten proximalen Endbereich und einen distalen Endbereich aufweist,
eine am distalen Endbereich der inneren proximalen Strebkonstruktion (5) angeordnete innere Mittelgelenkachse (7),
eine am distalen Endbereich der äußeren proximalen Strebkonstruktion (6) angeordnete äußere Mittelgelenkachse (8),
eine innere distale Strebkonstruktion (11), die einen an der inneren Mittelgelenkachse (7) angelenkten proximalen Endbereich und einen distalen Endbereich aufweist,
eine äußere distale Strebkonstruktion (12), die einen an der äußeren Mittelgelenkachse (8) angelenkten proximalen Endbereich und einen distalen Endbereich aufweist,
eine am distalen Endbereich der inneren distalen Strebkonstruktion (11) angeordnete innere distale Gelenkachse (13),
eine am distalen Endbereich der äußeren distalen Strebkonstruktion (12) angeordnete äußere distale Gelenkachse (14),
einen an der inneren Mittelgelenkachse (7) und der äußeren Mittelgelenkachse (8) angelenkten Adapter (9),
einen an der inneren distalen Gelenkachse (13) und der äußeren distalen Gelenkachse (14) angelenkten Roboterflansch,
eine am Vertikalträger (1) angebrachte erste Antriebseinheit (16),
ein proximales Zug-Druck-Element (15) zum Übertragen einer zur Auskragrichtung des Querträgers (2) parallelen Kraftkomponente von der ersten Antriebseinheit (16) auf eine der proximalen Strebkonstruktionen (5, 6),
eine am Vertikalträger (1) angebrachte zweite Antriebseinheit (18), und
ein distales Zug-Druck-Element (17) zum Übertragen einer zur Auskragrichtung des Querträgers (2) parallelen Kraftkomponente von der zweiten Antriebseinheit (18) auf eine der distalen Strebkonstruktionen (11, 12),
wobei die inneren und äußeren distalen und proximalen Gelenkachsen (3, 4, 11, 12) sowie die Mittelgelenkachsen orthogonal zu der von der Vertikalachse und der Auskragrichtung des Querträgers (2) aufgespannten Ebene angeordnet sind.

2. Manipulator gemäß Anspruch 1, ferner aufweisend
ein weiteres Zug-Druck-Element, das mit dem proximalen Zug-Druck-Element ein proximales Zug-Druck-Elementepaar (15a, 15b) zum Übertragen der zur Auskragrichtung des Querträgers (2) parallelen Kraftkomponente von der ersten Antriebseinheit (16) auf eine der proximalen Strebkonstruktionen (5, 6) bildet, und/oder
ein weiteres Zug-Druck-Element, das mit dem distalen Zug-Druck-Element ein distales Zug-Druck-Elementepaar (17a, 17b) zum Übertragen der zur Auskragrichtung des Querträgers (2) parallelen Kraftkomponente von der ersten Antriebseinheit auf eine der distalen Strebkonstruktionen (11, 12) bildet.

3. Manipulator gemäß einem der vorangehenden Ansprüche,
wobei das proximale Zug-Druck-Element (15) oder -Elementepaar (15a, 15b) zum Übertragen der zur Auskragrichtung des Querträgers (2) parallelen Kraftkomponente von der ersten Antriebseinheit (16) auf die innere proximale Strebkonstruktion (6) ausgelegt ist,
und/oder das distale Zug-Druck-Element (17) oder -Elementepaar (17a, 17b) zum Übertragen der zur Auskragrichtung des Querträgers (2) parallelen Kraftkomponente von der zweiten Antriebseinheit (18) auf die innere distale Strebkonstruktion (11) ausgelegt ist.

4. Manipulator gemäß einem der vorangehenden Ansprüche, wobei die erste Antriebseinheit (16) und/oder die zweite Antriebseinheit (18) als Linearantrieb ausgeführt ist/sind.

5. Manipulator gemäß einem der Ansprüche 1-3,
wobei die erste Antriebseinheit (16) und/oder die zweite Antriebseinheit als Rotationsantrieb (18) ausgeführt ist/sind,
und wobei vorzugsweise
das proximale Zug-Druck-Element (15) eine mit der ersten Antriebseinheit (16) verbundene erste Schwinge (28) und einen an der ersten Schwinge (28) und der einen der proximalen Strebkonstruktionen (5, 6) angelenkten proximalen Lenker (30) aufweist,
und/oder das distale Zug-Druck-Element (17) eine mit der zweiten Antriebseinheit (18) verbundene zweite Schwinge (29) und einen an der zweiten Schwinge (29) und der einen der distalen Strebkonstruktion (11, 12) angelenkten distalen Lenker (31) aufweist.

6. Manipulator gemäß einem der vorangehenden Ansprüche,
wobei die innere proximale Strebkonstruktion (5) ein inneres proximales Strebenpaar (5a, 5b) aufweist, das vorzugsweise über eine innere proximale Querstrebenkonstruktion (5c) miteinander verbunden ist,
und/oder die innere distale Strebkonstruktion (11) ein inneres distales Strebenpaar (11a, 11b) aufweist, das vorzugsweise über eine innere distale Querstrebenkonstruktion miteinander verbunden ist.

7. Manipulator gemäß einem der vorangehenden Ansprüche,
wobei die äußere proximale Strebkonstruktion (6) als äußere proximale Einzelstrebe ausgeführt ist,
und/oder die äußere distale Strebkonstruktion (12) als äußere distale Einzelstrebe ausgeführt ist.

8. Manipulator gemäß einem der vorangehenden Ansprüche, wobei
der horizontale Abstand zwischen dem Schwerpunkt der ersten Antriebseinheit (16) und der Vertikalachse (z)
und/oder der horizontale Abstand zwischen dem Schwerpunkt der zweiten Antriebseinheit (18) und der Vertikalachse (z)
geringer ist als die Hälfte, vorzugsweise als ein Drittel, des horizontalen Abstandes zwischen der inneren proximalen Gelenkachse (3) und der Vertikalachse (z).

9. Manipulator gemäß einem der vorangehenden Ansprüche, wobei die Vertikalachse (z) die erste Antriebseinheit (16) und/oder die zweite Antriebseinheit (18) durchdringt,
und wobei in Projektion auf eine horizontale Ebene vorzugsweise
der Schwerpunkt der ersten Antriebseinheit (16) näher an der Vertikalachse (z) als an einem beliebigen Punkt der Außenkontur der ersten Antriebseinheit (16) liegt,
und/oder der Schwerpunkt der zweiten Antriebseinheit (18) näher an der Vertikalachse (z) als an einem beliebigen Punkt der Außenkontur der zweiten Antriebseinheit (16) liegt.

10. Manipulator gemäß einem der vorangehenden Ansprüche, wobei in keinem der vier Sektoren, die zwischen zwei beliebigen orthogonal zueinander stehenden Ebenen liegen, deren Schnittlinie mit der Vertikalachse (z) zusammenfällt, mehr als zwei Drittel der Masse der ersten Antriebseinheit (16) und/oder mehr als zwei Drittel der Masse der zweiten Antriebseinheit (18) konzentriert sind.

11. Manipulator gemäß einem der vorangehenden Ansprüche, wobei der Vertikalträger (1) zwei Vertikalholme (1a, 1b) aufweist,
und wobei vorzugsweise
(i) die erste Antriebseinheit (16) an einem der Vertikalholme (1a, 1b) und
die zweite Antriebseinheit (18) am zweiten der Vertikalholme (1a, 1b) angebracht ist, oder
(ii) die erste Antriebseinheit (16) und/oder die zweite Antriebseinheit (18) zwischen den Vertikalholmen (1a, 1b) angeordnet sind.

12. Manipulator gemäß einem der vorangehenden Ansprüche, wobei am Roboterflansch (10) ein Effektor (48) vorgesehen ist,
und wobei vorzugsweise
der Effektor (48) relativ zum Roboterflansch (10) drehbar ist, und
der Manipulator eine dritte Antriebseinheit (49) zum Drehen des Effektors (48) aufweist.

13. Manipulator gemäß Anspruch 12, wobei
die dritte Antriebseinheit (49) am Vertikalträger (1) oder am Querträger (2) angebracht ist,
der Manipulator ferner ein die dritte Antriebseinheit (49) mit dem Effektor (48) verbindendes Drehmoment-Übertragungselement, insbesondere eine Kardanwelle (50), aufweist, und
das Drehmoment-Übertragungselement, insbesondere die Kardanwelle (50), eine Teleskopwelle ist oder axial verschieblich in der dritten Antriebseinheit (49) gelagert ist.

14. Manipulator gemäß Anspruch 13, wobei der horizontale Abstand zwischen dem Schwerpunkt der dritten Antriebseinheit (49) und der Vertikalachse (z) geringer ist als die Hälfte des horizontalen Abstandes zwischen der inneren proximalen Gelenkachse (3) und der Vertikalachse (z),
und wobei vorzugsweise
die dritte Antriebseinheit (49) am Vertikalträger (1) angebracht ist, und
die Vertikalachse (z) die dritte Antriebseinheit (49) durchdringt.

15. Manipulator gemäß einem der vorangehenden Ansprüche, ferner aufweisend eine mit dem Vertikalträger (1) mitdrehend verbundene Kamera (52), deren optische Achse in der horizontalen Projektion mit der Auskragrichtung des Querträgers (2) zusammenfällt oder mit der Auskragrichtung des Querträgers (2) einen Winkel von höchstens 15 Grad bildet.

16. Manipulator gemäß Anspruch 15, wobei die Kamera (52) höhenverstellbar und/oder um eine orthogonal zur optischen Achse stehende horizontale Achse schwenkbar ist.

17. Manipulator gemäß einem der vorangehenden Ansprüche, ferner aufweisend eine, insbesondere als Direktantrieb ausgebildete, Vertikalträger-Antriebseinheit zum Drehen des Vertikalträgers um die Vertikalachse (z).

18. Roboteraufbau, insbesondere als Teil einer automatisierten Kabelbearbeitungsanlage, umfassend einen Manipulator gemäß einem der vorangehenden Ansprüche.

## Claims

1. Manipulator, having
a vertical carrier (1) rotatable about a vertical axis (z),
a crossmember (2) which is connected to the vertical carrier (1) so as to rotate with it and projects from the vertical carrier (1),
an inner proximal joint pin (3) arranged on the crossmember (2) and spaced apart from the vertical carrier (1),
an outer proximal joint pin (4) arranged on the crossmember (2) and spaced apart from the vertical carrier further than the inner proximal joint pin (3),
an inner proximal strut construction (5) having a proximal end region, articulated on the inner proximal joint pin (3), and a distal end region,
an outer proximal strut construction (6) having a proximal end region, articulated on the outer proximal joint pin (4), and a distal end region,
an inner mid-joint pin (7) arranged on the distal end region of the inner proximal strut construction (5),
an outer mid-joint pin (8) arranged on the distal end region of the outer proximal strut construction (6),
an inner distal strut construction (11) having a proximal end region, articulated on the inner mid-joint pin (7), and a distal end region,
an outer distal strut construction (12) having a proximal end region, articulated on the outer mid-joint pin (8), and a distal end region,
an inner distal joint pin (13) arranged on the distal end region of the inner distal strut construction (11),
an outer distal joint pin (14) arranged on the distal end region of the outer distal strut construction (12),
an adapter (9) which is articulated on the inner mid-joint pin (7) and the outer mid-joint pin (8),
a robot flange articulated on the inner distal joint pin (13) and the outer distal joint pin (14),
a first drive unit (16) attached to the vertical carrier (1),
a proximal push-pull element (15) for transmitting a force component, parallel to the projecting direction of the crossmember (2), from the first drive unit (16) to one of the proximal strut constructions (5, 6),
a second drive unit (18) attached to the vertical carrier (1), and
a distal push-pull element (17) for transmitting a force component, parallel to the projecting direction of the crossmember (2), from the second drive unit (18) to one of the distal strut constructions (11, 12),
wherein the inner and outer distal and proximal joint pins (3, 4, 11, 12) and the mid-joint pins are arranged orthogonally with respect to the plane spanned by the vertical axis and the projecting direction of the crossmember (2).

2. Manipulator according to Claim 1, further comprising a further push-pull element which, together with the proximal push-pull element, forms a proximal push-pull element pair (15a, 15b) for transmitting the force component, parallel to the projecting direction of the crossmember (2), from the first drive unit (16) to one of the proximal strut constructions (5, 6), and/or
a further push-pull element which, together with the distal push-pull element, forms a distal push-pull element pair (17a, 17b) for transmitting the force component, parallel to the projecting direction of the crossmember (2), from the first drive unit to one of the distal strut constructions (11, 12).

3. Manipulator according to either of the preceding claims,
wherein the proximal push-pull element (15) or element pair (15a, 15b) is configured to transmit the force component, parallel to the projecting direction of the crossmember (2), from the first drive unit (16) to the inner proximal strut construction (6),
and/or the distal push-pull element (17) or element pair (17a, 17b) is configured to transmit the force component, parallel to the projecting direction of the crossmember (2), from the second drive unit (18) to the inner distal strut construction (11).

4. Manipulator according to one of the preceding claims, wherein the first drive unit (16) and/or the second drive unit (18) are/is designed as a linear drive.

5. Manipulator according to one of Claims 1-3,
wherein the first drive unit (16) and/or the second drive unit are/is designed as a rotational drive (18),
and wherein preferably
the proximal push-pull element (15) has a first link (28), connected to the first drive unit (16), and a proximal link (30), articulated on the first link (28) and the one of the proximal strut constructions (5, 6), and/or the distal push-pull element (17) has a second link (29), connected to the second drive unit (18), and a distal link (31) articulated on the second link (29) and the one of the distal strut constructions (11, 12).

6. Manipulator according to one of the preceding claims,
wherein the inner proximal strut construction (5) has an inner proximal strut pair (5a, 5b) which is preferably connected to one another via an inner proximal transverse strut construction (5c),
and/or the inner distal strut construction (11) has an inner distal strut pair (11a, 11b) which is preferably connected to one another via an inner distal transverse strut construction.

7. Manipulator according to one of the preceding claims,
wherein the outer proximal strut construction (6) is designed as an outer proximal individual strut,
and/or the outer distal strut construction (12) is designed as an outer distal individual strut.

8. Manipulator according to one of the preceding claims, wherein
the horizontal distance between the centre of gravity of the first drive unit (16) and the vertical axis (z)
and/or the horizontal distance between the centre of gravity of the second drive unit (18) and the vertical axis (z)
is less than half, preferably less than a third, of the horizontal distance between the inner proximal joint pin (3) and the vertical axis (z).

9. Manipulator according to one of the preceding claims, wherein the vertical axis (z) passes through the first drive unit (16) and/or the second drive unit (18), and wherein preferably, in a projection onto a horizontal plane,
the centre of gravity of the first drive unit (16) lies closer to the vertical axis (z) than to any arbitrary point of the outer contour of the first drive unit (16), and/or the centre of gravity of the second drive unit (18) lies closer to the vertical axis (z) than to any arbitrary point of the outer contour of the second drive unit (16).

10. Manipulator according to one of the preceding claims, wherein more than two thirds of the mass of the first drive unit (16) and/or more than two thirds of the mass of the second drive unit (18) are not concentrated in any of the four sectors which lie between two arbitrary planes which lie orthogonally with respect to one another and the intersection line of which coincides with the vertical axis (z).

11. Manipulator according to one of the preceding claims, wherein the vertical carrier (1) has two vertical spars (1a, 1b), and wherein preferably
(i) the first drive unit (16) is attached to one of the vertical spars (1a, 1b), and
the second drive unit (18) is attached to the second one of the vertical spars (1a, 1b), or
(ii) the first drive unit (16) and/or the second drive unit (18) are/is arranged between the vertical spars (1a, 1b).

12. Manipulator according to one of the preceding claims, wherein an effector (48) is provided on the robot flange (10),
and wherein preferably
the effector (48) is rotatable relative to the robot flange (10), and
the manipulator has a third drive unit (49) for rotating the effector (48).

13. Manipulator according to Claim 12, wherein
the third drive unit (49) is attached to the vertical carrier (1) or to the crossmember (2),
the manipulator has, furthermore, a torque transmission element, in particular a cardan shaft (50), which connects the third drive unit (49) to the effector (48), and
the torque transmission element, in particular the cardan shaft (50), is a telescopic shaft or is mounted in an axially displaceable manner in the third drive unit (49).

14. Manipulator according to Claim 13, wherein the horizontal distance between the centre of gravity of the third drive unit (49) and the vertical axis (z) is less than half the horizontal distance between the inner proximal joint pin (3) and the vertical axis (z),
and wherein preferably
the third drive unit (49) is attached to the vertical carrier (1), and
the vertical axis (z) passes through the third drive unit (49).

15. Manipulator according to one of the preceding claims, furthermore having a camera (52) which is connected to the vertical carrier (1) so as to rotate with it and the optical axis of which coincides, in the horizontal projection, with the projecting direction of the crossmember (2) or forms an angle of at most 15 degrees with the projecting direction of the crossmember (2).

16. Manipulator according to Claim 15, wherein the camera (52) is height-adjustable and/or pivotable about a horizontal axis lying orthogonally with respect to the optical axis.

17. Manipulator according to one of the preceding claims, furthermore having a vertical carrier drive unit, in particular in the form of a direct drive, for rotating the vertical carrier about the vertical axis (z).

18. Robot construction, in particular as part of an automated cable processing installation, comprising a manipulator according to one of the preceding claims.

## Revendications

1. Manipulateur, présentant
un support vertical (1) rotatif autour d'un axe vertical (z),
une traverse (2) reliée au support vertical (1) de manière à tourner avec celui-ci, en saillie par rapport au support vertical (1),
un axe d'articulation proximal intérieur (3) disposé sur la traverse (2), espacé du support vertical (1),
un axe d'articulation proximal extérieur (4) disposé sur la traverse (2), espacé du support vertical plus loin que l'axe d'articulation proximal intérieur (3),
une construction d'entretoise proximale intérieure (5), présentant une zone d'extrémité proximale articulée sur l'axe d'articulation proximal intérieur (3) et une zone d'extrémité distale,
une construction d'entretoise proximale extérieure (6) qui présente une zone d'extrémité proximale articulée sur l'axe d'articulation proximal extérieur (4) et une zone d'extrémité distale,
un axe d'articulation central intérieur (7) disposé sur la zone d'extrémité distale de la construction d'entretoise proximale intérieure (5),
un axe d'articulation central extérieur (8) disposé sur la zone d'extrémité distale de la construction d'entretoise proximale extérieure (6),
une construction d'entretoise distale intérieure (11) qui présente une zone d'extrémité proximale articulée sur l'axe d'articulation central intérieur (7) et une zone d'extrémité distale,
une construction d'entretoise distale extérieure (12) qui présente une zone d'extrémité proximale articulée sur l'axe d'articulation central extérieur (8) et une zone d'extrémité distale,
un axe d'articulation distal intérieur (13) disposé sur la zone d'extrémité distale de la construction d'entretoise distale intérieure (11),
un axe d'articulation distal extérieur (14) disposé sur la zone d'extrémité distale de la construction d'entretoise distale extérieure (12),
un adaptateur (9) articulé sur l'axe d'articulation central intérieur (7) et l'axe d'articulation central extérieur (8),
une bride robotisée articulée sur l'axe d'articulation distal intérieur (13) et l'axe d'articulation distal extérieur (14),
une première unité d'entraînement (16) fixée au support vertical (1),
un élément de traction-pression proximal (15) pour transmettre une composante de force parallèle à la direction de saillie de la traverse (2) depuis la première unité d'entraînement (16) vers l'une des constructions d'entretoise proximales (5, 6),
une deuxième unité d'entraînement (18) fixée au support vertical (1), et
un élément de traction-pression distal (17) pour transmettre une composante de force parallèle à la direction de saillie de la traverse (2) depuis la deuxième unité d'entraînement (18) vers l'une des constructions d'entretoise distales (11, 12),
les axes d'articulation distaux et proximaux intérieurs et extérieurs (3, 4, 11, 12) ainsi que les axes d'articulation centraux étant disposés orthogonalement au plan défini par l'axe vertical et la direction de saillie de la traverse (2).

2. Manipulateur selon la revendication 1, présentant en outre
un autre élément de traction-pression qui forme avec l'élément de traction-pression proximal une paire d'éléments de traction-pression proximaux (15a, 15b) pour transmettre la composante de force parallèle à la direction de saillie de la traverse (2) depuis la première unité d'entraînement (16) vers l'une des constructions d'entretoise proximales (5, 6), et/ou
un autre élément de traction-pression qui forme avec l'élément de traction-pression distal une paire d'éléments de traction-pression distaux (17a, 17b) pour transmettre la composante de force parallèle à la direction de saillie de la traverse (2) depuis la première unité d'entraînement vers l'une des constructions d'entretoise distales (11, 12).

3. Manipulateur selon l'une quelconque des revendications précédentes,
dans lequel l'élément de traction-pression proximal (15) ou la paire d'éléments (15a, 15b) est conçu(e) pour transmettre la composante de force parallèle à la direction de saillie de la traverse (2) depuis la première unité d'entraînement (16) vers la construction d'entretoise proximale intérieure (6),
et/ou l'élément de traction-compression distal (17) ou la paire d'éléments (17a, 17b) est conçu(e) pour transmettre la composante de force parallèle à la direction de saillie de la traverse (2) depuis la deuxième unité d'entraînement (18) vers la construction d'entretoise distale intérieure (11).

4. Manipulateur selon l'une quelconque des revendications précédentes, dans lequel la première unité d'entraînement (16) et/ou la deuxième unité d'entraînement (18) est/sont conçue(s) comme un entraînement linéaire.

5. Manipulateur selon l'une quelconque des revendications 1 à 3,
dans lequel la première unité d'entraînement (16) et/ou la deuxième unité d'entraînement sont conçue(s) comme un entraînement rotatif (18),
et dans lequel de préférence
l'élément de traction-pression proximal (15) comprend un premier bras oscillant (28) relié à la première unité d'entraînement (16) et un bras de guidage proximal (30) articulé sur le premier bras oscillant (28) et sur l'une des constructions d'entretoise proximales (5, 6),
et/ou l'élément de traction-pression distal (17) comprend un deuxième bras oscillant (29) relié à la deuxième unité d'entraînement (18) et un bras de guidage distal (31) articulé sur le deuxième bras oscillant (29) et sur l'une des constructions d'entretoise distales (11, 12).

6. Manipulateur selon l'une quelconque des revendications précédentes,
dans lequel la construction d'entretoise proximale intérieure (5) comprend une paire d'entretoises proximales intérieures (5a, 5b) qui sont reliées entre elles de préférence par une construction d'entretoise transversale proximale intérieure (5c),
et/ou la construction d'entretoise distale intérieure (11) comprend une paire d'entretoises distales intérieures (11a, 11b) qui sont reliées entre elles de préférence par une construction d'entretoise transversale distale intérieure.

7. Manipulateur selon l'une quelconque des revendications précédentes,
dans lequel la construction d'entretoise proximale extérieure (6) est conçue comme une entretoise proximale extérieure unique,
et/ou la construction d'entretoise distale extérieure (12) est conçue comme une entretoise distale extérieure unique.

8. Manipulateur selon l'une quelconque des revendications précédentes, dans lequel
la distance horizontale entre le centre de gravité de la première unité d'entraînement (16) et l'axe vertical (z) et/ou la distance horizontale entre le centre de gravité de la deuxième unité d'entraînement (18) et l'axe vertical (z)
est inférieure à la moitié, de préférence à un tiers, de la distance horizontale entre l'axe d'articulation proximal intérieur (3) et l'axe vertical (z).

9. Manipulateur selon l'une quelconque des revendications précédentes, dans lequel l'axe vertical (z) traverse la première unité d'entraînement (16) et/ou la deuxième unité d'entraînement (18),
et dans lequel, en projection sur un plan horizontal, de préférence
le centre de gravité de la première unité d'entraînement (16) est plus proche de l'axe vertical (z) que de n'importe quel point du contour extérieur de la première unité d'entraînement (16),
et/ou le centre de gravité de la deuxième unité d'entraînement (18) est plus proche de l'axe vertical (z) que de n'importe quel point du contour extérieur de la deuxième unité d'entraînement (16).

10. Manipulateur selon l'une quelconque des revendications précédentes, dans lequel, dans aucun des quatre secteurs situés entre deux plans orthogonaux quelconques dont la ligne d'intersection coïncide avec l'axe vertical (z) ne sont concentrés plus des deux tiers de la masse de la première unité d'entraînement (16) et/ou plus des deux tiers de la masse de la deuxième unité d'entraînement (18).

11. Manipulateur selon l'une quelconque des revendications précédentes, dans lequel le support vertical (1) comporte deux montants verticaux (1a, 1b) et dans lequel, de préférence
(i) la première unité d'entraînement (16) est montée sur l'un des montants verticaux (1a, 1b) et
la deuxième unité d'entraînement (18) est montée sur le deuxième des montants verticaux (1a, 1b), ou
(ii) la première unité d'entraînement (16) et/ou la deuxième unité d'entraînement (18) sont disposées entre les montants verticaux (1a, 1b).

12. Manipulateur selon l'une quelconque des revendications précédentes, dans lequel un effecteur (48) est prévu sur la bride robotisée (10),
et dans lequel de préférence
l'effecteur (48) peut tourner par rapport à la bride robotisée (10), et
le manipulateur comporte une troisième unité d'entraînement (49) pour faire tourner l'effecteur (48).

13. Manipulateur selon la revendication 12, dans lequel la troisième unité d'entraînement (49) est montée sur le support vertical (1) ou sur la traverse (2),
le manipulateur comporte en outre un élément de transmission de couple reliant la troisième unité d'entraînement (49) à l'effecteur (48), en particulier un arbre à cardan (50), et
l'élément de transmission du couple, en particulier l'arbre à cardan (50), est un arbre télescopique ou est monté de manière à pouvoir se déplacer axialement dans la troisième unité d'entraînement (49).

14. Manipulateur selon la revendication 13, dans lequel la distance horizontale entre le centre de gravité de la troisième unité d'entraînement (49) et l'axe vertical (z) est inférieure à la moitié de la distance horizontale entre l'axe d'articulation proximal intérieur (3) et l'axe vertical (z),
et dans lequel de préférence
la troisième unité d'entraînement (49) est montée sur le support vertical (1), et
l'axe vertical (z) traverse la troisième unité d'entraînement (49).

15. Manipulateur selon l'une quelconque des revendications précédentes, comportant en outre une caméra (52) reliée de manière à tourner avec le support vertical (1), dont l'axe optique, dans la projection horizontale, coïncide avec la direction de saillie du support transversal (2) ou forme un angle maximal de 15 degrés avec la direction de saillie du support transversal (2).

16. Manipulateur selon la revendication 15, dans lequel la caméra (52) est réglable en hauteur et/ou pivotante autour d'un axe horizontal orthogonal à l'axe optique.

17. Manipulateur selon l'une quelconque des revendications précédentes, comportant en outre une unité d'entraînement de support vertical, notamment conçue comme un entraînement direct, pour faire tourner le support vertical autour de l'axe vertical (z).

18. Structure robotisée, en particulier en tant que partie d'une installation automatisée de traitement de câbles, comprenant un manipulateur selon l'une quelconque des revendications précédentes.
